(19) Europäisches Patentamt
European Patent Office
Office européen des brevets

(11) **EP 0 792 446 B1**

(12) **EUROPÄISCHE PATENTSCHRIFT**

(45) Veröffentlichungstag und Bekanntmachung des Hinweises auf die Patenterteilung:
**03.03.1999   Patentblatt 1999/09**

(21) Anmeldenummer: **95940176.1**

(22) Anmeldetag: **15.11.1995**

(51) Int Cl.⁶: **G01L 9/00**

(86) Internationale Anmeldenummer:
**PCT/EP95/04486**

(87) Internationale Veröffentlichungsnummer:
**WO 96/16320 (30.05.1996 Gazette 1996/25)**

(54) **DRUCKSENSOR**

PRESSURE SENSOR

CAPTEUR DE PRESSION

(84) Benannte Vertragsstaaten:
**DE ES FR GB IT**

(30) Priorität: **18.11.1994   DE 4441194**

(43) Veröffentlichungstag der Anmeldung:
**03.09.1997   Patentblatt 1997/36**

(73) Patentinhaber: **Baader, Helmut**
**92507 Nabburg (DE)**

(72) Erfinder: **Baader, Helmut**
**92507 Nabburg (DE)**

(74) Vertreter: **Grill, Matthias, Dipl.-Ing. et al**
**Patentanwälte**
**Tiedtke-Bühling-Kinne & Partner**
**Bavariaring 4**
**80336 München (DE)**

(56) Entgegenhaltungen:
**FR-A- 1 187 259          GB-A- 1 461 277**
**US-A- 3 494 198**

**Beschreibung**

Die Erfindung bezieht sich auf einen Drucksensor gemäß dem Oberbegriff des Patentanspruchs 1, insbesondere für die Anwendung in Waschmaschinen, Geschirrspülmaschinen oder dgl.

In Wasch- und Geschirrspülmaschinen wird zur Regelung des Wasserstandes im Arbeitsraum üblicherweise während des Wasserzulaufes durch den steigenden Wasserspiegel in einer sogenannten Luftfalle ein Luftvolumen eingeschlossen und in ihm mit weiter steigendem Wasserspiegel ein Druck erzeugt, der abhängig von der Höhe des Wasserstandes im Arbeitsraum ist. Dieser Druck wird meist einem Membran-Druckschalter zugeführt, der bei Erreichen des Sollwasserstandes die Stromversorgung eines Magnetventiles unterbricht und damit den weiteren Zulauf des Wassers stoppt. In solchen Membranschaltern kann die druckabhängige Kraft der Membrane über Hebel auf mehrere im gleichen Gehäuse untergebrachte Schalter verteilt werden, die auf unterschiedliche Druckwerte eingestellt sind. Damit steht über die Anwahl eines der Schalter eine kleine Zahl unterschiedlicher Wasserstände zum Betrieb der Maschine zur Verfügung.

Da defekte Magnetventile, die im stromlosen Zustand geöffnet bleiben, einen Überlauf der Maschine mit der Folge von Wasserschäden verursachen können, sind diese Druckschalter meist mit einem von den Arbeitskontakten unabhängigen Zusatzkontakt ausgerüstet, der bei Überschreiten eines Wasserstandsgrenzwertes die Laugenpumpe der Maschine einschaltet und damit für eine gefahrlose Abfuhr des ungewollt zulaufenden Wassers in den Ablauf sorgt.

Ökologische Gesichtspunkte erfordern in neuen Wasch- oder Geschirrspülmaschinen die Senkung des Wasser-, Energie- und Waschmittelverbrauches auf das technisch erreichbare Minimum. Programmsteuerungen mit Mikrocomputern bieten hierzu gute Voraussetzungen. Die begrenzte Schaltgenauigkeit der Membranschalter und deren Beschränkung auf wenige, in der Regel max. 3 verschiedene Wasserstände stellen jedoch ein Hindernis für weitere Einsparungen dar. Der Einsatz von kontinuierlich arbeitenden Drucksensoren bietet den Vorteil, daß beliebig viele unterschiedliche Wasserstände für die Auswertung über den Steuerungsmikrocomputer und den Ablauf des Arbeitsprogrammes der Maschine zum Einsatz kommen können und damit das mögliche Einsparpotential voll ausgeschöpft werden kann.

Es ist eine Vielzahl von Drucksensoren mit analogem elektrischem Ausgangssignal bekannt. Dabei handelt es sich entweder um monolithische Halbleiter-Drucksensoren oder um Anordnungen, bei denen die Durchbiegung einer druckbeaufschlagten Membrane oder die Auslenkung eines elastischen Gliedes durch eine druckbeaufschlagte Membrane potentiometrisch, piezoresistiv, piezoelektrisch, induktiv, magnetoresistiv, kapazitiv, spannungsoptisch, mit Hallgeneratoren, über die Verstimmung von Resonanzfrequenzen oder auf ähnliche Weise in ein elektrisches Spannungs-, Strom- oder Frequenz-Analogsignal transformiert wird. Bei diesen Sensoren ist ein erheblicher elektronischer Schaltungsaufwand erforderlich, um das erzeugte Primärsignal zu verstärken, von konstanten Anteilen zu befreien, seine störende Temperaturabhängigkeit zu kompensieren bzw. das Signal anderweitig aufzubereiten. Der hierfür und für die nachfolgende A/D-Umsetzung zur Signalkopplung an Mikrocomputer erforderliche Aufwand ist beträchtlich und stellt ein Kostenhindernis für den Einsatz solcher Systeme in Haushaltgeräten dar Beispielsweise aus den DE OS 2918413, DE OS 3011671 und DE OS 3538914 A1 sind Drucksensoren bekannt, die Druck / Position - Umsetzer enthalten, wobei die druckabhängige Absolutstellung des beweglichen Gliedes in diesen Sensoren über Codescheiben, -segmente oder -streifen mit einer der Bitzahl entsprechenden Anzahl von Spuren und optoelektronischen Ableseeinheiten in Digitalworte umgesetzt wird. Bereits bei einer Auflösung von 8 Bit erfordern Sensoren dieser Bauart erheblichen Aufwand für die Herstellung und Justage des Codegebers sowie für die optoelektronische Ausleseeinheit und deren Justage und erlauben keine Miniaturisierung im erforderlichen Maße. Sensoren dieses Typs kommen daher wegen ihrer Größe und aus Kostengründen in Haushaltgeräten nicht zum Einsatz.

Außerdem enthalten weder die analogen, noch die digitalen Drucksensoren ein vom normalen Betriebs-Signalweg unabhängiges Sicherheitssystem gegen Überlauf, sodaß ein zusätzlicher Einfach-Membranschalter für den Überlaufschutz eingesetzt werden muß, der die Verwendung dieser Drucksensoren in Haushaltgeräten weiter erheblich verteuert.

Die GB-A-1461277 offenbart einen Drucksensor für Taucher, der mit einer beweglichen, druckbeaufschlagten Membran arbeitet, deren Auslenkung gegen eine Feder durch einen Inkrementalgeber mit zwei Gittern und optoelektronischer Ablesung erfaßt wird.

Aus der US 3 494 198 ist eine Druckanzeigevorrichtung bekannt die den ermittelten Druck mechanisch anzeigt.

Es ist Aufgabe der vorliegenden Erfindung, einen Drucksensor der eingangs genannten Art für den Einsatz in Wasch- und Geschirrspülmaschinen zu schaffen, der kostengünstig herstellbar und einsetzbar ist und ein druckabhängiges Digitalsignal erzeugt, das innerhalb der für die Anwendung erforderlichen Bedingungen und Genauigkeit unabhängig von der Umgebungstemperatur, Alterung und sonstigen Störeinflüssen ist und zusätzlich bei Überschreiten eines vorgegebenen Druckes Schalffunktionen ausführt, mit denen Schäden infolge des Ausfalles anderer Komponenten der Maschine verhindert werden können.

Die Aufgabe wird erfindungsgemäß mit den im kennzeichnenden Teil des Patentanspruches 1 aufgeführten Merkmalen gelöst.

Demnach wird erfindungsgemäß durch den inkrementalen Positionsgeber die durch die druckbeaufschlagte Membrane verursachte Auslenkung des gegen die Wirkung eines Federelementes bewegbaren Teiles in ein entsprechendes digitales Signal umgesetzt, welches der nachgeschalteten Zähleinrichtung zugeführt und zu Betriebssignalen umgesetzt werden kann. Der Positionsgeber ist kostengünstig herstellbar und erfordert keine besondere Justierung zur Erzielung einer gewünschten Genauigkeit. Ferner wird durch den Schutzschalter eine übermäßig große Druckbeaufschlagung der Membrane erfaßt und zu einem Signal ausgewertet, durch das über entsprechende Elemente Schutzmaßnahmen gegen den hohen Druck ausgelöst werden können, ohne hierzu einen gesonderten Sensor einzusetzen.

Vorteilhafte Ausgestaltungen des erfindungsgemäßen Drucksensors sind in den Unteransprüchen aufgeführt.

Die Erfindung wird nachstehend anhand von Ausführungsbeispielen unter Bezugnahme auf die Zeichnung näher erläutert.

Fig. 1 und 2 veranschaulichen das Funktionsprinzip des erfindungsgemäßen Drucksensors.

Fig. 3 und 4 sind Darstellungen zur Erläuterung der Wirkungsweise eines Inkremental- Positionsgebers.

Fig. 5 zeigt den Verlauf der Ausgangssignale des Positionsgebers nach Fig. 3 und 4 in Abhängigkeit von Positionsverschiebungen.

Fig. 6 ist eine Draufsicht auf ein Gitter eines Positionsgebers des erfindungsgemäßen Drucksensors.

Fig. 7 zeigt Ausgangssignale des Positionsgebers mit dem Gitter nach Fig. 6.

Fig. 8 bis 10 zeigen weitere Beispiele für Gitter von Positionsgebern.

Fig. 11 zeigt eine Ausführungsform des Einbaus des Positionsgebers in eine beispielhafte Ausführung des erfindungsgemäßen Drucksensors.

Fig. 12 ist eine graphische Darstellung der Fehlerabweichungen der Zählerstände von Sollwerten.

Fig. 13 bis 15 enthalten jeweils eine Darstellung eines Schutzschalters des erfindungsgemäßen Drucksensors.

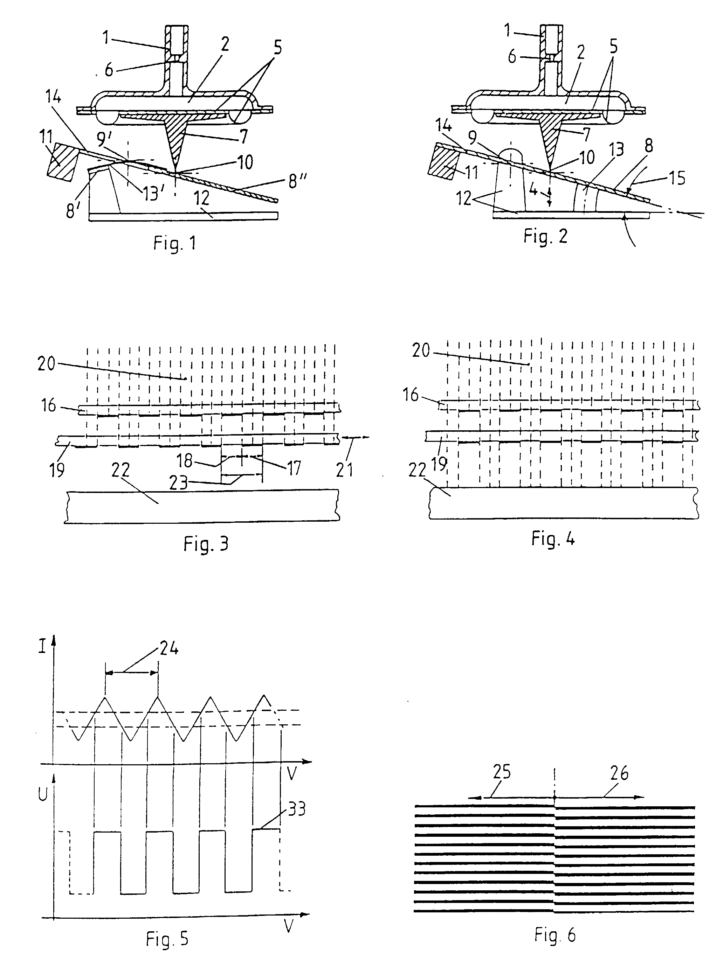

Die Arbeitsweise eines erfindungsgemäßen Drucksensors wird nachstehend anhand der Prinzipdarstellung in Fig. 2 erläutert.

Da in der nachstehenden Beschreibung absolute Drücke nicht vorkommen und somit keine Gefahr von Mißverständnissen besteht, wird zur Vereinfachung eine zwischen den beiden Seiten einer Membrane 5 wirkende Druckdifferenz kurz als Druck bezeichnet. Dabei ist davon auszugehen, daß der höhere Druck in einem Membranraum 2 herrscht.

Der Sensor enthält einen um eine Achse 9 im wesentlichen senkrecht zur Zeichnungsebene und damit im wesentlichen parallel zur Membranfläche an einem Träger 12 drehbar gelagerten Hebel 8, der unter der Einwirkung eines elastischen Elementes 13 (Druck-, Zug- oder Drehfeder ) steht, das bei Auslenkung des Hebels aus seiner Ruhelage eine Gegenkraft aufbaut. Der Träger 12 ist zunächst als relativ zur Membraneinspannung unbeweglich befestigt anzusehen. Andererseits wirkt am Hebel 8 eine druckabhängige Kraft des in Richtung eines Doppelpfeiles 4 beweglichen Mittelteiles der Membrane 5, da die Membrankraft über ein Übertragungsglied 7 von der Membrane an einem Punkt 10, der nicht auf der Achse 9 liegt, auf den Hebel 8 übertragen wird. Das Übertragungsglied 7 ist am Punkt 10 reibungsarm schwenkbar mit dem Hebel 8 verbunden. Die Gleichgewichtsstellung des Hebels 8, bestimmt durch einen Winkel 15 zwischen Hebel 8 und Träger 12, ist also abhängig vom Druck, wobei die jeweilige Position bevorzugt auf die Position des Hebels 8 zu beziehen ist, die er einnimmt, wenn der Druck gleich Null, das Federelement 13 also entspannt ist (= Nullpunkt). Die genaue Position, die der Hebel 8 bezogen auf den Träger 12 einnimmt, wird in der Praxis nicht nur vom Druck, sondern auch durch Exemplarstreuungen der verwendeten Teile und andere Störeinflüße mitbestimmt. Die dadurch hervorgerufenen Fehler und ihre Behandlung werden nachfolgend näher beschrieben. In der weiteren Beschreibung wird zunächst von idealen und reibungsfreien Teilen ausgegangen.

Wird die Größe des Winkels 15 über einen inkrementalen Geber in ein digitales elektrisches Signal umgesetzt, dann ist dieses Signal ein eindeutiges und reproduzierbares Maß für den Druck und damit den Wasserstand im Arbeitsraum einer Wasch- oder Geschirrspülmaschine.

Der Hebel 8 kann unter Verwendung eines Schneiden-, Wälz-, oder Spitzenlagers oder eines anderen reibungsarm gestalteten Gleitlagers um die Achse 9 an dem Träger 12 drehbar befestigt werden und über eine Zug-, Druck- oder Drehfeder so gegen den Träger 12 abgestützt sein, daß sich die erwünschte druckabhängige Auslenkung ergibt.

Anstatt den Hebel 8 über eines der obengenannten Lager um die Achse 9 an dem Träger 12 schwenkbar zu befestigen, kann mit Vorteil eine in Fig. 1 dargestellte erfindungsgemäße Konstruktion angewendet werden. Die Verbindung des Hebels 8 mit dem Träger 12 kann über eine entsprechend dimensionierte Blattfeder 13' erfolgen, wobei ein Ende ( mit oder ohne eine biegesteife Verstärkung 8') mit dem Träger 12 und das entgegengesetzte Ende mit einem ggf. biegesteifen Teil 8" des Hebels 8 fest verbunden ist. Wirkt die Membrankraft über das Übertragungsglied 7 an dem Punkt 10 auf diesen blattfedergelagerten Hebel, dann wird die Blattfeder 13' um eine zur Auflagekante am Träger 12 parallele Achse gebogen, sodaß der Hebel die gleiche Bewegung wie bei der beschriebenen Ausführung mit der Lagerung an der Achse 9 ausführen kann, wobei die sich bei der Blattfederaufhängung ergebende Position einer effektiven Achse 9' von den geometrischen Abmessungen der Blattfeder abhängt. Der Auslenkung des Hebels aus der kräftefreien Ruhelage setzt die Blattfeder 13' eine auslenkungsabhängige Kraft entgegen, wie sie in der Anordnung nach Fig. 2 durch das Federelement 13 erzeugt wird. Die Blattfeder 13' übernimmt also im Vergleich zum Aufbau nach Fig. 2 sowohl die Lagerung an der Achse 9' als auch je nach Dimensionierung ganz oder teilweise die Funktion des Federelementes 13. Damit ist die Ausführung mit der Blattfeder nicht nur kostengünstiger herstellbar, sondern hat darüberhinaus den Vorteil, daß die Lagerung vollkommen spielfrei und frei von Reibungskräften ist.

Eine weitere kostenmäßige Verbesserung ergibt sich bei einstückiger Fertigung des gesamten Teiles. Hierbei wird ein aus planem Blattfedermaterial gestanztes Teil in den Bereichen 8' und 8" oder nur 8" durch Sicken und / oder Abkantungen im erforderlichen Maß versteift, während der Bereich der Blattfeder 13' unversteift bleibt. An dieses einstückig gefertigte Teil kann auch das Befestigungselement für ein mit dem Hebel 8 bewegtes Teil des Positionsgebers zur Umsetzung des druckabhängigen Winkels 15 in ein elektrisches Digitalsignal mit angeformt werden. Damit kann ein zusätzlicher Kostenvorteil erzielt werden. Erfindungsgemäß kann am Hebel 8 über eine starre Verlängerung 14 ein Gegengewicht 11 nach Fig. 1 und Fig. 2 so angebracht werden, daß der Schwerpukt des Hebels 8 mit allen mit ihm kraft- oder formschlüssig verbundenen betriebsmäßig bewegten Teilen auf der Achse 9 bzw. 9' liegt. Die Stellung des Hebels 8 zum Träger 12 und die davon abgeleitete Ausgangsgröße des Sensors wird damit unempfindlich gegen Schwerkrafteinflüsse, Lageänderungen und translatorische Beschleunigungen. Die Ausführung mit einem als Massenausgleich dienenden Gegengewicht 11 kann unabhängig von der Art der Lagerung des Hebels 8 an dem Träger 12 realisiert werden.

Die reibungsarme Kopplung zwischen dem Übertragungsglied 7 und dem Hebel 8 am Punkt 10 kann als Schneidenlager ausgeführt werden. In einer alternativen Ausgestaltung erfolgt die Kopplung über eine Blattfeder, deren eines Ende mit dem Übertragungsglied 7 respektive dem beweglichen Mittelteil der Membrane 5 und deren anderes Ende mit dem Hebel 8 fest verbunden ist. Die Blattfeder ist dabei so eingebaut, daß die beiden im wesentlichen zueinander parallelen Einspannkanten an den beiden Enden der Blattfeder im wesentlichen parallel zur Achse 9 bzw. 9' stehen und die Blattfeder so ausgerichtet ist, daß sie die Membrankraft auf den Hebel 8 übertragen kann, ohne auszuknicken. Eine Ausrichtung dieser Art ergibt sich z.B., wenn die Blattfeder bei einer bestimmten, z.B. bei mittlerer Auslenkung des Hebels 8 plan ist und die Senkrechte auf die Wirkfläche der Membrane in deren Flächenschwerpunkt in der Ebene der Blattfeder liegt. Diese Koppel - Blattfeder wird bei der Auslenkung des Hebels 8 elastisch verformt und setzt der Verformung eine auslenkungsabhängige Kraft entgegen. Diese Kraft addiert sich zur Wirkung des Federelements 13 bzw. 13' und muß bei dessen Dimensionierung berücksichtigt werden. Der Vorteil dieser Anordnung liegt darin, daß die Auslenkung der Membrane damit ohne Beeinflußung durch Reibung auf den Hebel 8 übertragen wird.

Wird die Membrane 5 aus Metall gefertigt, kann sie so dimensioniert werden, daß der elastische Widerstand, den sie einer Auslenkung durch den Druck entgegensetzt, das Federelement 13 bzw. 13' in seiner Wirkung ganz oder teilweise ersetzt. Der Hebel 8 dient dann im wesentlichen nur der Führung eines an ihm befestigten Teiles eines inkrementalen Positionsgebers. Eventuell kann der Hebel 8 ganz entfallen.

Die Umsetzung der Position des druckabhängig bewegbaren Teiles, z.B. des Hebels 8 in Bezug auf den Träger 12 in ein Digitalsignal erfolgt mit einem inkrementalen Positionsgeber mit optoelektronischer Abtastung, dessen Funktion anschließend erläutert wird.

Gemäß Fig. 3 und Fig. 4 ist jeweils auf einem transparenten Substrat eine Gitteranordnung 16 bzw. 19 als System von lichtundurchlässigen, zueinander parallelen und gleich breiten Streifen aufgebracht, die durch untereinander ebenfalls gleich breite transparente Streifen voneinander getrennt sind. Eine Breite 17 der lichtundurchlässigen und eine Breite 18 der transparenten Streifen sind jeweils über deren Länge konstant. Im wesentlichen entspricht die Breite 18 der Streifenabstände der Streifenbreite 17, sie kann aber auch abweichend gestaltet werden. Die Summe 23 der Breite eines lichtundurchlässigen Gitterstreifens und der Breite eines anschließenden transparenten Streifens ist die Gitterkonstante. In Fig. 3 und Fig. 4 verlaufen die Streifen senkrecht zur Zeichenebene. In der Abbildung ist also eine Ansicht auf das Gitter dargestellt, in der die Schmalseite der Gitterstreifen zu sehen ist. In geringem Abstand zum Gitter 16 ist flächenparallel ein weiteres, identisch ausgebildetes Gitter 19 so angeordnet, daß sowohl die Streifen wie auch die Flächen der beiden Gitter parallel zueinander stehen und die beiden Gitter sich nicht berühren. Die beiden Gitter 16 und 19 können senkrecht zu den Streifen und parallel zu ihrer Fläche in Richtung eines Doppelpfeiles 21 gegeneinander bewegt werden. Fällt ein Lichtbündel 20 mit vorzugsweise geringem Bündelöffnungswinkel so auf die Anordnung der beiden Transparentgitter, daß es durch diese hindurchtritt, dann fällt auf einen hinter dem Gitterpaar liegenden Photodetektor 22 ein von der Stellung der beiden Gitter zueinander abhängiger Lichtstrom, der in der Stellung nach Fig. 3 ein Minimum und in der Stellung nach Fig. 4 ein Maximum erreicht. Am Gitter auftretende Lichtbeugungseffekte bleiben ohne wesentlichen Einfluß, wenn die Gitterkonstante 23 einerseits groß gegen die Wellenlänge des verwendeten Lichtes und andererseits nicht wesentlich kleiner ist als der Abstand zwischen den Gittern 16 und 19. Diese Bedingungen werden in dem erfindungsgemäßen Sensor eingehalten, was gleichzeitig eine kostengünstig herstellbare Anordnung ergibt.

Fig. 5 zeigt qualitativ den Verlauf der auf den Photodetektor 22 treffenden Lichtintensität "I" bzw. des durch diese hervorgerufenen Photostromes in Abhängigkeit von der Verschiebung "V". Die Periodenlänge 24 dieses Intensitätsverlaufes entspricht dabei der Gitterkonstante 23. Über eine elektronische Schwellwertschaltung, wie sie meist auch an den Eingängen von integrierten elektronischen Digitalschaltungen und Mikroprozessoren vorliegt, kann dieses Dreieckssignal in ein Rechtecksignal umgesetzt werden. Die bei Verschiebung der beiden Gitter hinter der Schweltwertschaltung entstehenden Rechtecksignale 33 mit der Spannungsamplitude "U" können elektronisch gezählt werden. Das Zählergebnis ist ein Maß für die Größe der Verschiebung.

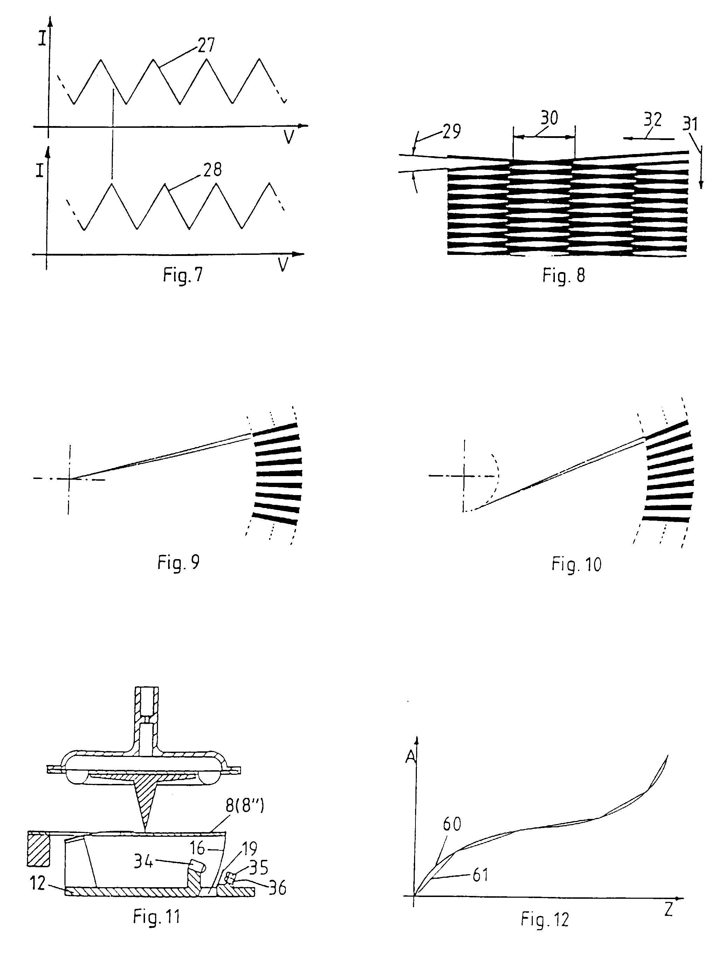

Für eine praxisgerechte Realisierung des inkrementalen Positionsgebers ist jedoch noch eine Erweiterung notwendig, da die bisher beschriebene Anordnung die Richtung einer Verschiebung nicht erkennen läßt, sodaß keine saldierende Erfassung von Verschiebungen mit wechselnder Richtung möglich ist. Gemäß Fig. 6 wird eines der beiden Gitter in zwei Bereiche 25 und 26 geteilt, wobei die Trennlinie zwischen den Bereichen nicht parallel zu den Gitterlinien verläuft, und das Gitter so gestaltet ist, daß in einem der Bereiche das Gittermuster senkrecht zu den Gitterlinien in der Gitterebene um 1/4 der Gitterkonstante bezogen auf den anderen Bereich versetzt ist. Jedem der beiden Bereiche 25 und 26 wird einen eigener Photodetektor zugeordnet, wobei beide Bereiche vom durchgehend ohne Versatz gestalteten zweiten Gitter überdeckt und von der Lichtquelle durchleuchtet werden. Dadurch ergeben sich bei Verschiebung der Gitter 16 und 19 gegeneinander an den Photodetektoren die in Fig. 7 dargestellten Verläufe 27 und 28 der Lichtintensität und der durch sie erzeugten Ausgangssignale. Diese beiden um 1/4 der Periodenlänge gegeneinander versetzten Signale erlauben in bekannter Weise eine Vor- / Rückwärtszählung der abgeleiteten Rechtecksignale, sodaß ein in einem elektronischen Zähler gebildetes Zählergebnis jeder Positionsänderung folgt und immer die augenblickliche Verschiebung zwischen den Gittern 16 und 19 von einer Nullstellung bei Beginn der Zählung ausgehend wiedergibt.

Es ergibt sich identische Funktion gemäß vorstehendem Absatz, wenn auch das zweite Gitter in zwei Bereiche 25' und 26' so geteilt ist, daß jeweils die Bereiche 25 und 25' bzw 26 und 26' der beiden Gitter einander geometrisch so zugeordnet sind, daß das durchtretende Lichtbündel, vor es die Photodetektoren erreicht, nacheinander die Bereiche 25 und 25' bzw. 26 und 26' durchdringt und durch einen Versatz der Gittermuster senkrecht zum Verlauf der Gitterlinien analog zu der vorstehend beschriebenen Anordnung dafür gesorgt wird, daß bei Verschiebung der beiden Gitter gegeneinander an den Ausgängen der beiden Photodetektoren Signale erzeugt werden, die um 1/4 der Periodenlänge gegeneinander versetzt sind. Solange diese Bedingung erfüllt ist, kann der hierfür erforderliche Versatz der Gittermuster zwischen den Bereichen 25 und 26 bzw. 25' und 26' beliebig auf die beiden Gitter 16 und 19 verteilt werden.

Eine andere Möglichkeit zur Erzeugung der beiden um 1/4 der Periodenlänge gegeneinander versetzten elektrischen Signale für die Vor- / Rückerkennung ergibt sich aus einer erfindungsgemäßen Anordnung, die ausschnittsweise mit vergröbertem Gitterraster in Fig. 8 dargestellt ist. Verdreht man nämlich die beiden Gitter 16 und 19 um eine auf der Gitterebene senkrecht stehende Achse um einen konstanten Winkel 29 ( < 90° ) gegeneinander, dann ergeben sich in der Durchsicht der hintereinander angeordneten Gitter Bereiche, in denen die undurchsichtigen Gitterstreifen eines Gitters jeweils die transparenten Streifen des anderen Gitters abdecken, sodaß die Bereiche weitgehend lichtundurchlässig werden und andere Bereiche, in denen die transparenten Streifen beider Gitter zur Deckung kommen, sodaß diese Bereiche teilweise lichtdurchlässig sind. Es ergeben sich also geometrische Interferenzen der beiden Streifengitter. In dem so entstehenden Interferenzmuster folgt der Bereich konstanter Helligkeit der Winkelhalbierenden des stumpfen Winkels zwischen den Gitterstreifen des Gitters 16 und denen des Gitters 19. Die Entstehung dieser Interferenzstreifen erklärt sich ohne weitere Erläuterung aus Fig. 8. Die Ortsperiode 30 der Interferenzstreifen in Richtung eines Pfeiles 32 hängt hierbei vom Winkel 29 ab und ist proportional zum Kehrwert des Sinus des Winkels 29. Bei Verschiebung der beiden Gitter gegeneinander in Richtung eines Pfeiles 31 unter Konstanthaltung des Winkels 29 bewegt sich das Interferenzbild in Richtung des Pfeiles 32 und zwar um eine Ortsperiode 30 bei einer Gitterverschiebung in Richtung 31 um eine Gitterkonstante. Positioniert man in dieses Interferenzbild zwei Photodetektoren, deren Abstand voneinander in Richtung des Pfeiles 32 einem ungerade-ganzzahligen Vielfachen von 1/4 der Ortsperiode 30 entspricht, so ergeben sich bei linearer Verschiebung der beiden Gitter gegeneinander bei konstantem Winkel 29 wieder Intensitätsverläufe bzw. Ausgangssignale der Photodetektoren gemäß Fig. 7. Die Anordnung erlaubt somit die Erfassung der Verschiebung der beiden Gitter gegeneinander bezogen auf einen Anfangspunkt durch Vor- / Rückwärtszählung der von den Signalen gemäß Fig. 7 abgeleiteten Rechtecksignale. Erfindungsgemäß wird dabei ein Abstand zwischen den beiden Photodetektoren entsprechend 1/4 der Ortsperiode 30 bevorzugt, bei dem beide Photodetektoren im selben Interferenzstreifen positioniert sind.

Schließlich können die Gitter 16 und 19 auch so ausgeführt werden, daß sie untereinander ungleiche Gitterkonstanten besitzen, die sich zueinander z.B. wie 10:9, wie 45:44, wie 100:99 usw. verhalten. Ordnet man zwei so gestaltete Gitter mit parallelen Gitterlinien an, dann ergeben sich Interferenzstreifen, die parallel zu den Gitterlinien verlaufen und sich bei gegenseitiger Verschiebung in oder gegen die Verschieberichtung bewegen, wobei die Verschiebung der Interferenzstreifen 10, 45 bzw. 100 usw. mal größer ist, als die mechanische Verschiebung der Gitter gegeneinander. Die Länge der Ortsperiode beträgt das 10, 45 bzw. 100 usw. -fache der Gitterkonstante. Auch in ein auf diesem Wege erzeugtes Interferenzfeld können zwei Photodetektoren um ein ungerade-ganzzahliges Vielfaches von 1/4 der Ortsperiode versetzt so positioniert werden, daß sich Signale gemäß Fig. 7 ergeben. Auch hier wird ein Versatz um 1/4 der Ortsperiode erfindungsgemäß bevorzugt.

Unabhängig von der vorstehend beschriebenen Gestaltung und Anordnung der Gitter zur Erzeugung der beiden um 1/4 der Periodenlänge gegeneinander versetzten Signale aus den Photodetektoren muß die Gitterteilung nicht über die ganze Fläche konstant sein. In gewissen Grenzen kann die Gitterteilung absichtlich mit einer längs der Verschieberichtung unterschiedlich bemessenen Gitterkonstante ausgeführt werden, beispielsweise um einen nichtlinearen Zusammenhang zwischen dem Zählergebnis und der Größe der Verschiebung zu erzeugen.

Bei allen beschriebenen Ausführungen ergibt sich im Prinzip die identische Funktion, wenn beide Gitter nicht eben sind, sondern die Form eines Zylindermantels haben, wobei die Gitterlinien im wesentlichen in Richtung der Mantellinien des Zylinders verlaufen oder wenn beide Gitter auf Kegelmäntel aufgebracht sind und die Gitterlinien im wesentlichen in Richtung der Mantellinien des jeweiligen Kegels verlaufen. Anstelle einer Ausrichtung nach den Mantellinien können die Gitterlinien auch einen Winkel < 90° zu diesen einschließen. Die beiden Zylinder- oder Kegelmäntel, auf denen die Gitter 16 und 19 liegen, werden hierbei im wesentlichen koaxial oder zumindest nicht mit aufeinander senkrecht stehenden Achsen angeordnet. Die Verschiebung der Gitter gegeneinander erfolgt in diesem Fall durch Verdrehen der beiden Zylinder bzw. Kegel gegeneinander. Die Ausführung der Gitter, ihre gegenseitige Ausrichtung und die Positionierung der Photodetektoren zur Erzeugung der beiden um 1/4 der Periodenlänge gegeneinander versetzten elektrischen Signale entspricht sinngemäß einer der für die ebene Anordnung weiter oben beschriebenen. Das Zählergebnis der durch die Photodetektoren erzeugten Signale repräsentiert in diesem Fall die relative Winkelposition der beiden Zylinder- oder Kegelgitter. Das bezogen auf die Lichtquelle und die Photodetektoren feststehende Gitter kann dabei hinsichtlich seiner räumlichen Ausdehnung auf den von den Photodetektoren erfaßten Bereich begrenzt werden. Ist dieser klein genug, dann kann das feststehende Gitter trotz zylinder- bzw. kegelförmiger Biegung des beweglichen Gitters ohne wesentliche Änderung der Funktion plan sein.

Weiterhin können die Gitter so ausgeführt werden, daß die Gitterlinien auf den Mittelpunkt eines Kreises ausgerichtet sind, bzw. einen Kreis tangieren. Fig. 9 und Fig. 10 zeigen Ausschnitte aus solchen "Radialgittern" mit stark vergröbert dargestellter Gitterstruktur. Die Gitterkonstante von Gittern dieser Art wird anstatt über ein Längenmaß besser durch einen Teilungswinkel beschrieben. Werden zwei solche Gitter so übereinandergelegt, daß ihre Mittelpunkte auf einer senkrecht auf der Gitterebene stehenden Achse liegen, dann ergeben sich bei Verdrehung der beiden Gitter gegeneinander die gleichen Verhältnisse wie bei den Parallelgittern, wenn man die lineare Verschiebung durch den Drehwinkel ersetzt. Auch bei Gittern dieser Art können die beschriebenen Methoden zur Erzeugung der um 1/4 der Periodenlänge gegeneinander versetzten Signale an den Ausgängen der beiden Photodetektoren, nämlich die Aufteilung eines der Gitter in zwei Bereiche mit gegeneinander um 1/4 der Gitterkonstante versetzten Gitterlinien analog der Anordnung gem. Fig. 6, die Einführung eines Winkehlersatzes zwischen den Gitterlinien der beiden Gitter analog der Anordnung gem. Fig. 8 oder die Verwendung von zwei Gittern mit Gitterkonstanten, die zueinander im Verhältnis 10:9, 45:44 usw. stehen, in sinngemäßer Anpassung angewendet werden. Eine der Anordnung nach Fig. 8 entsprechende Ausführung zur Erfassung von Winkeln ergibt sich beispielsweise durch Übereinanderlegen einer Scheibe nach Fig. 9 und einer Scheibe nach Fig. 10 oder von zwei entsprechen unterschiedlich ausgeführten Scheiben nach Fig. 10. Die Interferenzfigur gemäß Fig. 8 ergibt dann konzentrische Kreise, deren Durchmesser sich bei gegenseitiger Verdrehung der beiden Gitter verändern. In dieses Interferenzfeld können zwei Photodetektoren so positioniert werden, daß ihr Abstand in radialer Richtung n/4 der Ortsperiode beträgt, wobei n eine ungerade ganze Zahl ist. Erfindungsgemäß wird n=1 bevorzugt.

Interferenzverhältnisse ähnlich Fig. 8 lassen sich auch dadurch erzeugen, daß die Mittelpunkte der beiden flächenparallelen Scheiben nicht wie vorstehend beschrieben auf einer senkrecht zur Fläche stehenden Achse liegen, sonder gegeneinander in radialer Richtung um ein bestimmtes Maß verschoben sind. Dabei entstehen in einem begrenzten geometrischen Bereich, dessen Mitte bezogen auf die Richtung des Achsversatzes im Winkel um 90° versetzt liegt, auswertbare, von der Verdrehung der beiden Gitter gegeneinander abhängige Interferenzen. In diesem Interferenzfeld werden die beiden Photodetektoren geometrisch so angeordnet, daß sie Bereiche der Interferenzfigur optisch erfassen, die zu um 1/4 der Periodenlange gegeneinander versetzten Signalen führen, wenn die beiden Gitter relativ zu einander verdreht werden.

Im übrigen ist es für die Funktion aller beschriebenen Gitteranordnungen unerheblich, ob bei der Verschiebung beide Gitter bewegt werden oder bei einem feststehenden Gitter nur das andere. Die Signale entsprechen der Relativbewegung der Gitter gegeneinander. Auch die Durchstrahlungsrichtung ( z.B. in Fig. 3 oder Fig. 4 von oben nach unten bzw. von unten nach oben) ist unerheblich.

Ebenso können die lichtundurchlässigen Gitterlinien beider Gitter reflektierend ausgeführt werden oder es kann eine Anordnung zweier Gitter mit einem gerichtet oder diffus reflektierenden Hintergrund hinterlegt werden. Bei dieser Gestaltung wird reflektive Abtastung möglich. Die Lichtquelle und die Photodetektoren werden dann auf der gleichen Seite der Gitteranordnung angeordnet.

Alternative optische Anordnungen, bei denen eines der Gitter funktionsgerecht über optische Komponenten ( Spiegel, Linsen etc. ) auf das andere oder über Spiegel und Linsen etc. auf sich selbst abgebildet wird oder bei denen optische Komponenten auf beliebigem anderem Wege in den Strahlengang gebracht werden, sind im Prinzip funktionsidentisch mit den beschriebenen Anordnungen.

In der vorstehenden Beschreibung wurde davon ausgegangen, daß die Richtung der Verschiebung, entsprechend dem Doppelpfeil 21 auf den Gitterstreifen im wesentlichen senkrecht steht. Diese Bedingung muß jedoch nicht erfüllt sein. Ist der Winkel zwischen der Verschieberichtung und den Gitterstreifen > 0°, aber < 90°, dann wird lediglich ohne sonstige Änderungen der Wirkungsweise eine veränderte effektive Gitterkonstante wirksam.

Die Gitter 16 und 19 können hinsichtlich des Verhältnisses der Breite der undurchsichtigen zur Breite der transparenten Streifen unterschiedlich ausgeführt sein. Hierdurch wird lediglich die Tiefe der Modulation der Lichtintensität und / oder die Kurvenform des Modulationsverlaufes beeinflußt.

Es lassen sich weitere sinngemäß gleich arbeitende Gitteranordnungen konstruieren, die jeweils Signale erzeugen, mit denen in der beschriebenen Weise über Vor- / Rückwärtszählung eine translatorische oder Winkelverschiebung zwischen zwei Gittern bzw. zwischen Teilen erfasst werden können, an denen die Gitter befestigt sind. Als Beispiel seien Gitter auf Kugelflächen mit meridianähnlichem Verlauf der Gitterlinien genannt.

Nachstehend wird unter Bezugnahme auf Fig. 11 ein Ausführungsbeispiel für den Einbau des Positionsgebers in einer der vorstehend beschriebenen Formen in den erfindungsgemäßen Drucksensor beschrieben.

Wenn gemäß Fig. 11 ein zylinder- oder kegelmantelförmiges Gitter 16 an dem Hebel 8 einer Anordnung nach Fig. 1 oder Fig. 2 und ein zweites Gitter 19 sowie eine Lichtquelle 34, beispielsweise eine Leuchtdiode oder ein Halbleiterlaser, und die beiden Photodetektoren 35 und 36 ( Phototransistoren oder Photodioden etc. ) entsprechend der vorstehenden Beschreibung an dem Träger 12 befestigt werden, dann gibt das Ergebnis der Vor- / Rückwärtszählung der von den beiden Photodetektoren gelieferten Signale den Winkel 15 zwischen dem Hebel 8 und dem Träger 12 bezogen auf eine bei Nullstellen des Zählers gegebene Anfangsstellung wieder. Die Gitter 16 und 19 werden dabei so befestigt, daß die Zylinder- bzw. Kegelachse des beweglichen Gitters im wesentlichen mit der Drehachse 9 bzw. 9' des Hebels 8 übereinstimmt, während diejenige des unbeweglichen, sofern dieses nicht plan ist, koaxial oder im wesentlichen parallel zur Achse 9 bzw. 9' steht. Da die Winkelstellung des Hebels 8 gegenüber dem Träger 12 dem Druck entspricht, entspricht auch das Zählergebnis dem Druck. Die Nullstellung des Zählers erfolgt bevorzugt im drucklosen Zustand, der z.B. in Waschmaschinen nach dem Abpumpen bzw. vor dem Wasserzulauf vorliegt.

Wird ein "Radialgitter" nach Fig. 9 oder 10 an dem Hebel 8 so befestigt, daß seine Fläche senkrecht zur Achse 9 bzw. 9' steht und der Kreismittelpunkt auf dieser Achse liegt und ein zweites, flächenparalleles "Radialgitter", dessen Mittelpunkt ebenfalls auf der Achse 9 bzw. 9' liegt oder dieser gegenüber radial verschoben ist, zusammen mit der aus Lichtquelle und Photodetektoren bestehenden optoelektronischen Abtasteinheit in geometrisch richtiger Gestaltung und Anordnung an dem Träger 12 befestigt, dann läßt sich das gleiche Ergebnis erzielen.

Äquivalent sind Anordnungen, die sich aus den übrigen vorangehend beschriebenen unterschiedlichen Anwendungen und Ausführungen von "Radialgittern" nach Fig. 9 und Fig. 10 oder anderen Gittern ergeben.

Wird die Lichtquelle 34 mit den beiden Photodetektoren 35 und 36 in einer der beschriebenen Anordnungen nicht an dem Träger 12, sondern an dem Gehäuse der Sensoranordnung befestigt, dann kann der Träger 12 gegenüber dem Gehäuse beweglich ausgeführt werden, ohne daß flexible elektrische Verbindungen zwischen dem Gehäuse oder externen elektrischen Anschlüssen und der Lichtquelle bzw. den Photodetektoren erforderlich werden. Ebenso kann die Befestigung der Lichtquelle einerseits und der Photodetektoren andererseits konstruktiv beliebig zwischen Träger 12 und Gehäuse der Sensoranordnung aufgeteilt werden, da im druckmäßigen Arbeitsbereich des Drucksensors der Träger 12 eine feste Position gegenüber dem Gehäuse der Sensoranordnung einnimmt. Gemäß der nachfolgenden Beschreibung eines in den erfindungsgemäßen Drucksensor integrierten Schutzschalters wird die Beweglichkeit des Trägers 12 nur bei Drücken wirksam, die oberhalb des Arbeitsbereiches des digitalen Drucksensors liegen, sodaß die Funktion des Drucksensors im Arbeitsbereich hierdurch nicht beeinflußt wird.

Die vorstehend beschriebene Anordnung und ihre Varianten ergeben einen digitalen Drucksensor, dessen Ausgangssignale über einen Mikrocomputer ausgewertet werden können. Nachstehend werden Einzelheiten zur Auswertung der Signale aus den beiden Photodetektoren dargelegt.

Gemäß Fig. 7 wird durch die Gitteranordnung die Intensität des auf die Photodetektoren fallenden Lichtes in Abhängigkeit von der Verschiebung der Gitter gegeneinander annähernd dreieckförmig moduliert.

Das durch diese modulierte Lichtintensität am Ausgang der Photodetektoren erzeugte elektrische Signal hat bis auf unbedeutende Abweichungen durch nichtlineare Übertragungskennlinien den gleichen Verlauf. Zur Umsetzung in Rechtecksignale für die nachgeschaltete Vor- / Rückwärtszähleinrichtung muß eine Schwellwertschaltung, die auch integraler Bestandteil der Eingangsschaltung einer integrierten elektronischen Schaltung z. B. eines Mikrocomputers sein kann, verwendet werden. Die Schaltschwelle bzw. der Mittelwert zwischen Ein- und Ausschaltschwelle soll, um eine symmetrische Umsetzung zu erreichen, dem Mittelwert zwischen dem Maximal- und dem Minimalwert des elektrischen Dreiecksignales entsprechen. Diese Bedingung ist durch eine Einstellung der Intensität der verwendeten Lichtquelle und der Arbeitswiderstände der Photodetektoren erfüllbar.

Da sowohl eine als Lichtquelle verwendete Leuchtdiode oder ein Halbleiterlaser als auch Phototransistoren oder -dioden temperaturabhängiges Verhalten haben, muß die von der Lichtquelle abgegebene Intensität durch Beeinflussung des durch die Lichtquelle fließenden Stromes über eine bekannte elektronische Kompensationsschaltung so temperaturabhängig gesteuert werden, daß über den Arbeitstemperaturbereich das Ausgangssignal der Photodetektoren bei unveränderter Stellung der Gitter gegeneinander möglichst konstant bleibt und die Schwellvertbedingung damit hinreichend genau erfüllt wird. Die beiden verwendeten Photodetektoren müssen hierzu einen möglichst gleichen Temperaturkoeffizienten ihrer Lichtempfindlichkeit haben. Eine alternative Möglichkeit, den Einfluß der Temperaturabhängigkeit von Lichtquelle und Photodetektoren auf ein unschädliches Maß zu reduzieren, besteht darin, einer Regelschaltung im Rückführungszweig das Ausgangssignal eines weiteren Photodetektors zuzuführen, der ebenfalls von der Lichtquelle direkt oder indirekt beleuchtet wird, aber so eingebaut ist, daß die auf ihn treffende Lichtintensität nicht durch die Stellung der Gitter beeinflußt wird, und die Lichtquelle mit dem Ausgangssignal der Regelschaltung so zu betreiben, daß das Ausgangssignal der Photodetektoren bei unveränderter Stellung der Gitter gegeneinander über den Arbeitstemperaturbereich weitestgehend konstant bleibt. Hierzu müssen alle drei verwendeten Photodetektoren einen möglichst gleichen Temperaturkoeffizienten ihrer Lichtempfindlichkeit haben.

Die Signale aus den Photodetektoren des inkrementalen Positionsgebers können direkt als um 1/4 der Periodenlänge gegeneinander versetzte Zählsignale oder über eine zwischengeschaltete Signalaufbereitung, die auf einer Leitung ein Zählrichtungssignal und auf einer zweiten ein Zähltaktsignal erzeugt, einem elektronischen Vor- / Rückwartszähler zugeführt werden. Als Zähler kann auch ein entsprechend programmierter Mikrocomputer verwendet werden. Wird der Zählerinhalt auf Null gesetzt, wenn der Druck gleich Null ist, dann folgt der Zählerstand ansteigenden und fallenden Druckänderungen und entspricht jeweils dem gerade herrschenden Druck.

Der Mikrocomputer zur Auswertung der Signale aus den Photodetektoren des inkrementalen Positionsgebers und / oder andere zur Signalerzeugung oder -auswertung benötigte elektronische Bauelemente oder Baugruppen können in das Gehäuse des Drucksensors eingebaut oder außerhalb dieses Gehäuses angeordnet werden.

Erfindungsgemäß wird empfohlen, die Zählung und Auswertung der Signale aus dem inkrementalen Positionsgeber mit einem für die Steuerungsaufgaben (z.B. für den Programmablauf einer Wasch- oder Geschirrspülmaschine) bereits vorhandenen und entsprechend programmierten Mikrocomputer vorzunehmen. Hieraus resultiert eine kostenmäßig besonders günstige Gesamtlösung.

Die Erfassung des Wasserstandes im Arbeitsraum einer Waschmaschine bei drehender Trommel erfordert die Ermittlung des zeitlichen Mittelwertes des Druckes in der Luftfälle mindestens über die Zeit einer Trommelumdrehung, da das Wasser im Arbeitsraum durch die Trommeldrehung periodisch "schwappt" und der Druck entsprechende zeitabhängige Schwankungen um einen dem Wasserstand bei ruhender Trommel entsprechenden Mittelwert zeigt. Auch bei anderen Anwendungen des Drucksensors können kurzfristige Druckschwankungen auftreten, die durch Mittelung der Meßergebnisse unterdrückt werden sollen. Zur Mittelwertbildung kann zwischen die Druckquelle, in Waschmaschinen den pneumatischen Ausgang der Luftfalle und den Membranraum 2 des Drucksensors eine Querschnittsverengung 6 beispielsweise in einem Schlauch-Anschlußstutzen 1 nach Fig. 1 und Fig. 2 des Drucksensors eingesetzt werden, die als pneumatische Drossel wirkt und die Druckschwankungen im Membranraum 2 vermindert. Diese Drossel stellt zusammen mit dem nachgeschalteten Volumen für die Druckschwankungen einen Tiefpaß erster Ordnung dar. Erfindungsgemäß wird diese pneumatische Dämpfung so dimensioniert, daß die Stellung des Hebels 8 gegenüber dem Träger 12 infolge der Druckschwankungen noch geringfügig um die dem Mittelwert des Druckes entsprechende Stellung schwankt. Eine Vergrößerung der Zeitkonstante dieses Tiefpasses über ein gewisses Maß wäre nachteilig, weil dann Änderungen des mittleren Druckes ( Wasserstandes ) zeitlich stark verzögert erkannt würden. Mit einem Tiefpaß höherer Ordnung kann bei gleicher Dämpfung der höherfrequenten Anteile eine kürzere Verzögerungszeit erzielt werden. Die Realisierung eines weiteren, nachgeschalteten Tiefpasses erfolgt vorzugsweise im Auswertprogramm für die Zählergebnisse der Signale des Drucksensors im nachgeschalteten Mikrocomputer durch Mittelung mehrerer Druckwerte über entsprechende Programmierung. Die zur Mittelung herangezogenen Einzel - Druckwerte werden bei periodisch oder annähernd periodisch auftretenden Druckschwankungen über eine oder mehrere Perioden verteilt erfaßt. Mit dieser Vorgehensweise wird auch der Einfluß der inneren Reibung der Membrane und der Reibung zwischen mechanisch bewegten Teile der Sensoranordnung eliminiert, da die Reibungen infolge der hin- und hergehenden Bewegungen Fehlerbeiträge mit wechselnden Vorzeichen ergeben, die auf den sich ergebenden Mittelwert ohne Einfluß bleiben. Ohne diesen Ausgleich führen Reibungen erkennbar zu einer Resultatverfälschung, da z.B. der Hebel 8 als Folge der Reibung statisch nie genau die dem Druck entsprechende Stellung erreicht.

Die Gitterkonstante der im Sensor verwendeten Gitter ergibt zusammen mit der Fläche der Membrane 5, der Federkonstante des Federelementes 13 bzw. 13' und der über die Abmessungen des Hebels 8 gegebenen mechanischen Übersetzung die Größe der Quantisierungsschritte, mit denen der Druck durch den Sensor erfaßt werden kann. Erfindungsgemäß wird die Auflösung durch eine Verkleinerung der Quantisierungsschritte ohne verteuernde Verkleinerung der Gitterkonstante dadurch verbessert, daß bei der beschriebenen Mittelung über ein Rechenprogramm das Mittelungsergebnis um eine entsprechende Zahl von Binärstellen genauer berechnet wird als dem primären Zählschritt entspricht, d.h. die Mittelung erfolgt auf Halb-, Viertel- usw. Zählschritte. Dabei ergibt sich kein Scheinergebnis, sondern eine relevante Verbesserung der Auflösung, die auch für die interne Signalverarbeitung im Mikrocomputer u. a. für die nachfolgend beschriebene erfindungsgemäße Fehlerkorrektur und zur Verminderung des Restfehlers vorteilhaft ist.

In der bisherigen Beschreibung wurden ideale, untereinander in ihren Abmessungen und sonstigen Kenngrößen identische Einzelteile für die Produktion des erfindungsgemäßen Drucksensors vorausgesetzt. In der Praxis ist dieser Zustand jedoch unter wirtschaftlichen Bedingungen nicht annähernd erzielbar. Es ist daher erfindungsgemäß vorgesehen, durch entsprechende Maßnahmen dafür Sorge zu tragen, daß möglichst große Exemplarstreuungen durch die Toleranzen der verwendeten Einzelteile oder die Montage des Sensors ohne störende Auswirkung auf das Endergebnis bleiben.

Durch Exemplarstreuungen hinsichtlich der Membran-Wirkfläche, der Federrate des Federelementes 13 bzw. 13', der Hebelverhältnisse am Hebel 8 und weiterer Enflüsse ergeben sich Fehler des Proportionalitätsfaktors K in der Gleichung:

$$Z = K * p,$$

wobei Z dem Vor- / Rückwärtszählergebnis der Signale aus den Photodetektoren und p dem zu messenden Druck entspricht. Die Streuung des Proportionalitätsfaktors kann bei kostengünstig gefertigten Einzelteilen erheblich störende Abweichungen des mit dem Drucksensor gemessenen Wertes vom wirklichen Druckwert verursachen. Eine mechanische Justage, durch die die exemplarspezifischen Abweichungen ausgeglichen würden, wäre zwar grundsätzlich möglich, aber teuer. Eine Eichung nach dem Einbau des Sensors in eine Haushaltsmaschine scheidet aus, da im Servicefall ein Austausch des Sensor gegen ein beliebiges anderes Exemplar ohne Nachjustage möglich sein muß. Außerdem ergeben sich darüberhinaus Abweichungen von der in der obigen Gleichung für Z vorausgesetzten linearen Abhängigkeit von p durch die nichtlineare hubabhängige Änderung der Wirkfläche der verwendeten Membrane sowie die stellungsabhängige Auslenkcharakteristik des Hebels 8 in Kombination mit dem Federelement 13 respektive 13' und deren Kraft / Hub-Charakteristik und weitere Einflüsse.

Fig. 12 zeigt als Kurve 60 ein beliebiges mögliches Beispiel für auftretende Abweichungen "A" des gemittelten Zählergebnisses vom echten Wert, aufgetragen gegen das tatsächliche Zählergebnis "Z". Das Beispiel enthält sowohl Linearitäts-, wie Proportionalitätsfehler.

Erfindungsgemäß werden diese Abweichungen nach der mechanischen Montage der Drucksensoren für jedes Exemplar mittels einer Eichmessung punktweise ermittelt und als Digitalwerte in einem zum Drucksensor gehörigen Speicher beliebiger Bauart permanent abgelegt. Der über die Vor- / Rückwärtszählung ggf. nach Mittelung gewonnene "Roh"-Druckwert wird im Mikrocomputer durch Subtraktion der gespeicherten Abweichungen korrigiert, Linearitäts- und Proportionalitätsfehler werden damit beseitigt und es wird der Einsatz zusammen mit einem beliebigen Exemplar einer Mikrocomputer-Steuerung bei der Serienfertigung von Wasch- oder Geschirrspülmaschinen bzw. im Kundendiensteinsatz ohne individuelle Anpassung ermöglicht.

Ein Polygonzug 61 gibt eine Annäherung an den Verlauf der Kurve 60 wieder. Dabei ergeben sich Restabweichungen zwischen den Werten des Polygonzuges 61 und der Kurve 60, die mit steigender Zahl der verwendeten Polygonecken (= Stützpunkte ) immer kleiner werden. Bei einer vereinfachten erfindungsgemäßen Ausführung der exemplarspezifischen Fehlerkorrektur werden die Abweichungen zwischen den mit dem Drucksensor gemessenen und ggf. nach dem beschriebenen Verfahren gemittelten Einzel - Druckwerten und den dazugehörigen Idealwerten an einer bestimmten Zahl von Eichpunkten im Druckarbeitsbereich am fertigmontierten Drucksensor ermittelt und damit die Stützpunkte eines Korrekturpolygonzuges ermittelt. Die Werte dieser Stützpunkte werden dann als Digitalwerte in einem zum Drucksensor gehörigen Speicher beliebiger Bauart permanent abgelegt. Der über die Vor-/ Rückwärtszählung ggf. nach Mittelung gewonnene "Roh"-Druckwert wird im Mikrocomputer durch Subtraktion der im Korrektur-Polygonzug gespeicherten Abweichungen korrigiert, wobei zwischen den Stützpunkten des Polygonzuges der Korrekturwert linear interpoliert wird. Die Größe der in der Praxis auftretenden Nichtlinearitäten ist gering genug, um bereits über wenige Polygonstützpunkte die verbleibende Restabweichung des so korrigierten Endergebnisses vom Idealwert unter einer für die praktische Anwendung nicht mehr störenden Grenze zu halten. Der für die beschriebene Korrektur erforderliche "Eichwertspeicher" ist infolge der geringen Anzahl der zu speichernden Werte ebenso wie die zu ihrer Ermittlung erforderliche Eichmessung unaufwendig. Aus dieser modifizierten erfindungsgemäßen Fehlerkorrektureinrichtung resultiert ein Kostenvorteil gegenüber der vorangehend beschriebenen Vorgehensweise.

Analog zu der vorstehend beschriebenen Vorgehensweise können die Abweichungen zwischen den mit dem Drucksensor gemessenen und nach dem beschriebenen Verfahren gemittelten Einzel - Druckwerten und den dazugehörigen Idealwerten an einer bestimmten Zahl von Eichpunkten im Druckarbeitsbereich am fertig montierten Drucksensor ermittelt und daraus die Parameter einer mathematischen Funktion errechnet werden, die an den Verlauf der Abweichungskurve z.B. der Kurve 60 angepaßt ist. Diese Parameter können dann als Digitalwerte in einem zum Drucksensor gehörigen Speicher beliebiger Bauart permanent abgelegt werden. Der über die Vor- / Rückwärtszählung ggf. nach Mittelung gewonnene "Roh"-Druckwert wird im Mikrocomputer durch Subtraktion der aus der über die Parameter festgelegten Funktion errechneten Abweichungen korrigiert. Auch bei dieser Vorgehensweise kann mit wenigen Parametern eine Korrekturfunktion festgelegt werden, die eine für die Erfordernisse der Praxis hinreichend genaue Korrektur der Fehler ergibt. Auch bei dieser Vorgehensweise ist für die Speicherung der Funktionsparameter nur eine sehr kleine Anzahl von Speicherplätzen und damit ein unaufwendiger "Eichwertspeicher" und eine geringe Zahl von Meßpunkten zur Festlegung der Funktionsparameter erforderlich, sodaß sich eine kostengünstige Herstellbarkeit ergibt.

Die bleibende Zuordnung des für die Fehlerkorrektur nach einem der drei vorstehend beschriebenen Verfahren verwendeten Speichers zu einem bestimmten Sensor - Exemplar ergibt sich z.B. durch den festen Einbau des Speichers in das Gehäuse der Sensoranordnung.

Findet ein zur Sensoreinheit gehörender eigener und in das Gehäuse der Sensoreinheit fest eingebauter Mikrocomputer Verwendung für die beschriebene Auswertung und Korrektur der Sensorsignale, kann an dessen Ausgang das fertig aufbereitete und fehlerkorrigierte digitale elektrtische Drucksignal an einer seriellen oder parallelen Datenschnittstelle zur Verfügung stehen.

Die Spannungsversorgung der in das Gehäuse der Sensoranordnung eingebauten elektronischen Bauelemente und die zwischen ihnen und externen elektronischen Baugruppen benötigten Signalpfade setzen ebenso wie die Anschlüsse zum in das Gehäuse der Sensoranordnung integrierten Schutzschalter entsprechende elektrische Verbindungen voraus. Diese Verbindungen werden über einen oder mehrere am Gehäuse des Drucksensors fest angebrachte Steckverbinder mit entsprechender Polzahl und / oder über eine entsprechende Zahl von ebenfalls mit dem Gehäuse des Drucksensors fest verbundenen Lötstiften hergestellt, über die die gesamte Anordnung direkt mit einer Leiterplatte verbunden werden kann oder an die Drähte oder andere elektrische Verbindungen angelötet werden können.

Während der Gebrauchsdauer des Sensors eintretende Verschiebungen des mechanischen Nullpunktes, d.h. der Stellung des Hebels 8 gegenüber dem Träger 12 im drucklosen Zustand, bleiben ohne Auswirkung auf den Einsatz des Drucksensors, da der Nullpunkt vor der Messung im drucklosen Zustand, z.B. bei jedem Waschgang vor dem Wasserzulauf durch eine Zähler-Rücksetzung neu eingestellt wird.

Durch entsprechende Dimensionierung und Vorbehandlung der Einzelteile und / oder des fertigmontierten Drucksensors mit dem integriertem Schutzschalter wird überdies sichergestellt, daß durch Alterung von Bauelementen keine die Funktion beeinträchtigenden Veränderungen des Ausgangssignales des Sensors oder des Schutzschalters innerhalb der üblichen Gebrauchsdauer eintreten.

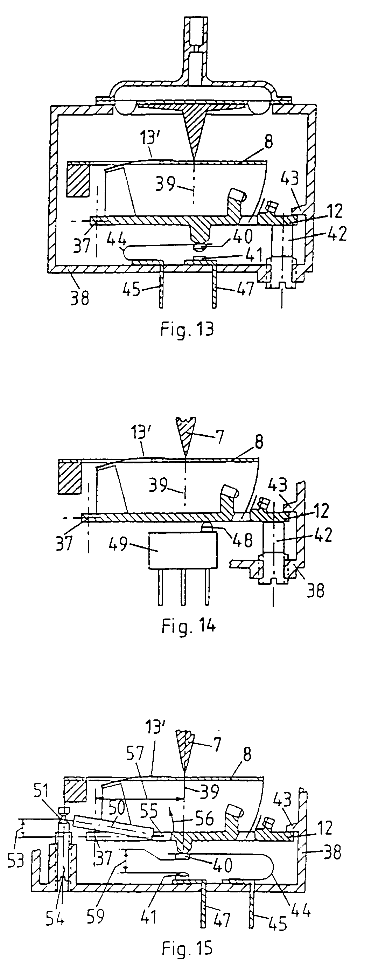

Nachstehend werden unter Bezugnahme auf die Fig. 13, 14 und 15 Ausführungsbeispiele für den integrierten Einbau des Schutzschalters in den erfindungsgemäßen Drucksensor beschrieben.

Die druckabhängige Kraft der Membrane kann über einen Hebel auf zwei oder mehr Kraftabgabestellen verteilt werden. An eine der Kraftabgabeseiten des Hebels kann erfindungsgemäß der vorstehend beschriebene inkrementale Drucksensor angekoppelt werden, an eine andere kann ein kraftmäßig vorgespannter elektromechanischer Schalter beliebiger Bauart angesetzt werden, dessen Schaltkontakte unter dem Einfluß der Membran kraft bei Überschreiten eines eingestellten Druckes ihre Schaltstellung ändern und elektrische Verbraucher ein-, aus- oder umschalten können.

Eine verbesserte erfindungsgemäße Kraftkopplung zwischen der Membrane und dem digitalen Drucksensor sowie dem Schutzschalter nach Fig. 13, 14 oder 15 nützt im Gegensatz zur vorstehend beschriebenen Kraftaufteilung die volle druckabhängige Membrankraft sowohl für den digitalen Drucksensor als auch für die Schalterbetätigung aus, sodaß bei gleicher Membran - Wirkfläche höhere Kontaktkräfte erreicht werden als bei einer Anordnung mit Aufteilung der Membrankraft über ein Kraftverteilungsglied. Zudem kann die Gesamtanordnung mit weniger Teilen kostengünstiger realisiert werden.

Wird der Träger 12 in einer erfindungsgemäßen Anordnung gem. Fig. 13 um eine Achse 37 in einem nur angedeutet dargestellten Gehäuse 38 der Sensoranordnung so drehbar gelagert, daß diese Achse im wesentlichen parallel zur Fläche der Membrane, zumindest nicht senkrecht auf ihr steht, aber die Senkrechte 39 zur Fläche der Membrane in deren Flächenschwerpunkt nicht schneidet, dann kann eine Schwenkbewegung des Trägers 12 gegenüber dem Gehäuse 38 der Sensoranordnung unter dem Einfluß der Membrankraft zum Schließen eines Kontaktpaares 40 und 41 benutzt werden. Die Lagerung des Trägers im Gehäuse kann über ein Schneidenlager oder alternativ wie für die Lagerung des Hebels 8 auf dem Träger 12 beschrieben, über ein Blattfedergelenk erfolgen. Der Träger 12 wird über eine eventuell mit einer Schraube einstellbar vorgespannte Feder 42 entgegen der Wirkung der Membrankraft gegen einen Anschlag 43 im Gehäuse 38 gedrückt. Übersteigt die über die Feder 13 bzw. 13' auf den Träger übertragene Membrankraft die eingestellte Vorspannung, dann löst sich der Träger 12 vom Anschlag 43 und bewegt sich mit dem Kontakt 40 auf den am Gehäuse 38 der Sensoranordnung befestigten Kontakt 41 zu, bis er auf diesem aufliegt und die elektrische Verbindung hergestellt ist. Der Kontakt 40 steht in kraftschlüssiger Verbindung zum Träger 12 oder ist an ihm befestigt und über eine flexible Zuleitung 44 mit einem äußeren Anschluß 45 verbunden. Hierfür kann auch die Feder 42 oder das zur schwenkbären Befestigung des Trägers 12 im Sensorgehäuse eingesetzte Gelenk benutzt werden, Der Kontakt 41 ist über eine starr ausführbare Zuleitung mit einem äußeren Anschluß 47 verbunden. Über diesen Schalter wird bei Überschreitung des mit der Feder 42 eingestellten Grenzwertes beispielsweise ein elektrischer Verbraucher eingeschaltet.

Ersichtlich setzt das Schließen der Kontakte nicht voraus, daß eine ordnungsgemäße Funktion des digitalen Drucksensors oder der Signalauswertung über den Mikrocomputer gegeben ist. Der Schutzschalter arbeitet somit unabhängig vom ungestörten Normalbetrieb des digitalen Drucksensors, da über das Kontaktpaar 40 und 41 z.B. die Laugenpumpe einer Wasch- oder Geschirrspülmaschine direkt und ohne Beteiligung weiterer Bauelemente mit dem Netzspannungsanschluß verbunden werden kann. Die erfindungsgemäße Ausführung hat den Vorteil, daß der technische Aufwand und damit die Kosten wesentlich geringer gehalten werden als bei Verwendung eines getrennten Einfach-Membranschalters als Schutzschalter.

Die vorstehend beschriebene Ausführung des Schutzschalters kann erfindungsgemäß noch dadurch weiter verbessert werden, daß das Kontaktpaar 40 und 41 nicht wie beschrieben bei steigendem Wasserstand "schleichend" geschlossen wird. Diese schleichende Arbeitsweise führt dazu, daß beim Schließen die Kontakte 40 und 41 anfänglich mit verschwindend geringer Kraft aufeinander gedrückt werden. Daraus ergibt sich eine kontakttechnisch ungünstige Arbeitweise, die starken Abbrand und die Gefahr des Verschweissens der Kontakte mit sich bringt. Zudem ergibt sich z.B. beim Einsatz als Überlauf - Schutzschalter bereits bei minimalem Absinken des Wasserstandes im Arbeitsraum der Maschine infolge der Wirkung der eingeschalteten Pumpe ein Wiederöffnen der Kontakte. Daraufhin steigt der Wasserstand wieder, die Pumpe wird erneut eingeschaltet usw. Das Ein- und Ausschalten der Pumpe erfolgt mit hoher Schalthäufigkeit mit der abträglichen Folge erhöhten Verschleißes am Kontaktpaar und der Pumpe sowie erhöhter Funkstörungen.

Abhilfe kann geschaffen werden durch den Einsatz eines kraftmäßig vorgespannten Schnappschalters als Schutzschalter mit dem Vorteil, daß einerseits das Kontaktpaar eines Schnappschalters sofort nach dem Schließen mit einer Kontaktkraft in erwünschter Höhe zusammengedrückt wird und daß andererseits infolge der internen Rückwirkung in einem Schnappschaltsystem eine Hysterese im Schaltverhalten entsteht. Diese Hysterese hat zur Folge, daß z.B. das Abschalten der Laugenpumpe erst nach merklichem Absinken des Wasserstandes im Arbeitsraum (z.B. um 50 mm ) erfolgt und dadurch die Schalthäufigkeit des Schutzschalters wesentlich reduziert wird.

In Fig 14 ist eine derart verbesserte erfindungsgemäße Anordnung gezeigt, bei der durch die vom Anschlag 43 wegführenden Bewegung des Trägers 12 nach Überschreiten des eingestellten Grenz - Druckes über ein Koppelglied 48 ein Schnappschalter 49 betätigt wird. Geeignete Schnappschalter ( "Mikroschalter") sind in zahlreichen Aufbauvarianten bekannt. Der Schnappschalter 49 ist daher nur symbolisch durch ein Rechteck angedeutet, da Einzelheiten seines Aufbaus nicht relevant sind. Schnappschalter dieser Art schalten um, sobald das Koppelglied 48 beim Eindrükken eine vorgegebene Position erreicht oder überfährt, und schalten zurück, sobald im Rückwärtshub eine zweite, um eine vorgegebene Schaltwegedifferenz weiter außen liegende Position erreicht oder überfahren wird. Die Justage der Position des Mikroschalters zum Träger 12 bzw. zum Anschlag 43 muß daher so erfolgen, daß im Rückhub die Rückschalt-Stellung sicher erreicht wird, bevor der Träger 12 auf den Anschlag 43 trifft. Um Veränderungen während der Gebrauchsdauer Rechnung zu tragen, muß diese Justage eine gewisse Hubreserve beinhalten. Das hat zur Folge, daß eine Kosten verursachende Justage erforderlich wird. Außerdem löst sich der Träger 12 bereits bei einer Membrankraft vom Anschlag 43, die um die mit der Federrate der Feder 42 ( umgerechnet auf den Ort der Senkrechten 39 ) multiplizierte Summe aus der Schaltwegedifferenz des Mikroschalters + Hubreserve niedriger ist als der Wert, bei dem der Schutzschalter schließt. Sobald der Träger 12 sich vom Anschlag 43 löst, wird aber die Funktion des Positionsgebers beeinflußt. Die sichere Funktion des Gebers hört folglich bereits deutlich unter dem Druckwert auf, bei dem die Schaltschwelle des Schutzschalters liegt. Bei Anwendungen, bei denen nur eine sehr kleine Differenz zwischen dem höchsten, durch den digitalen Drucksensor zuverlässig zu erfassenden Druckwert und der Schaktschwelle des Schutzschälters vorliegt, kann ein System dieser Art folglich nicht eingesetzt werden.

Fig. 15 zeigt eine weiter verbesserte und darum bevorzugte erfindungsgemäße Anordnung, die bei weiter vermindertem technischem Aufwand das gewünschte Verhalten des Schutzschalters bewirkt und die Nachteile der vorstehend beschriebenen Anordnungen vermeidet. Der Träger 12 ist ebenfalls links von der Senkrechten 39 auf die Membranfläche in deren Flächenschwerpunkt um die Achse 37 mindestens um einen begrenzten Winkel schwenkbar an dem nur angedeutet gezeichnete Gehäuse 38 gelagert. Eine gespannte Zugfeder 50 ist an einem Befestigungspunkt 51 um eine im wesentlichen zur Achse 37 parallele Achse frei schwenkbar am Gehäuse 38 so betestigt, daß dieser Befestigungspunkt zwar auf der gleichen Seite der Senkrechten 39 angeordnet ist wie die Achse 37, jedoch weiter von der Senkrechten 39 entfernt ist als die Achse 37. Das andere Ende der Zugfeder 50 ist auf der anderen Seite der Achse 37 an einem Punkt 55 am Träger 12 so befestigt, daß es ebenfalls um eine im wesentlichen zur Achse 37 parallele Achse bezogen auf den Träger frei schwenken kann. Ein Abstand 53 in Richtung der Senkrechten 39 zwischen dem Befestigungspunkt 51 und der verlängerten Geraden zwischen der Achse 37 und dem Befestigungspunkt 55 der Zugfeder 50 kann durch Justage beispielsweise über eine Schraube 54 auf einen gewünschten Wert eingestellt werden. Liegt der Punkt 51 oberhalb der Geraden, dann ergibt die Wirkung der Zugfeder 50 ein gegen den Uhrzeiger gerichtetes auf den Träger 12 wirkendes Drehmoment 56, das den Träger gegen den Anschlag 43 drückt. Die Höhe dieses Drehmomentes 56 ist proportional zur Zugkraft der Feder 50 und zum Abstand 53, kann also durch Justage des Abstandes 53 eingestellt werden. Da der Abstand 53 aber abnimmt, sobald der Träger 12 sich vom Anschlag 43 wegbewegt, nimmt auch das Drehmoment 56 bei dieser Bewegung entsprechend ab. Die Membrankraft wird über das Übertragungsglied 7 zunächst auf den Hebel 8 und im weiteren über das Federelement 13 bzw. 13' auf den Träger 12 übertragen. Überschreitet das Drehmoment, das durch das Produkt aus der Membrankraft und einem Abstand 57 zwischen der Achse 37 und der Senkrechten 39 gegeben ist, das entgegengerichtete von der Feder 50 herrührende Drehmoment 56, dann löst sich der Träger vom Anschlag 43. Es ergibt sich eine Schwenkbewegung des Trägers 12 um seine Achse 37 nach Fig. 15 im Uhrzeigersinn, in deren Verlauf das Drehmoment 56 kontinuierlich abnimmt, während das von der Membrankraft herrührende vom Anschlag 43 wegführende Drehmoment bei konstantem Druck gleichbleibt. Dadurch erfolgt ein beschleunigtes Umschnappen des Trägers 12 analog der Umschaltbewegung des beweglichen Schaltarmes eines Schnappschalters, das erst zum Stillstand kommt, wenn der Träger 12 auf ein Hindernis trifft, beispielsweise indem der bewegungsmäßig mit dem Träger 12 gekoppelte Kontakt 40 auf den mit dem Gehäuse 38 fest verbundenen Gegenkontakt 41 trifft. Der Kontakt 40 ist über eine flexible elektrisch leitende Verbindung 44 mit dem äußeren Anschluß 45 verbunden. Hierfür kann auch die Zugfeder 50 oder ein zur schwenkbaren Befestigung des Trägers 12 an der Achse 37 eingesetztes Gelenk, z.B. eine Blattfeder oder ein Schneidenlager benutzt werden. Der Gegenkontakt 41 ist über eine leitende Verbindung mit dem externen Anschluß 47 verbunden.

Die in der Senkrechten 39 in Richtung auf die Membrane gerichtete Kraft, die sich aus dem Quotienten des durch den Abstand 57 dividierten Drehmomentes 56 ergibt, ist also von der Stellung des Trägers 12 abhängig. Diese Abhängigkeit kann durch eine Federrate $R_T$ beschrieben werden, die sich aus der Änderung dieser Kraft dividiert durch die Größe der ihr zugrundeliegenden Verschiebung in Richtung und am Ort der Senkrechten 39 ergibt. Diese Federrate ist negativ, d.h. die einer Bewegung entgegengerichtete Kraft nimmt proportional zur Verschiebung ab. Damit ergibt sich für die Kraft, mit der die Kontakte 40 und 41 nach dem Umschalten bei konstantem Druck aufeinandergedrückt werden, der Wert:

$$F_{KP} = \left| R_T * a \right|,$$

wobei a einem in Fig. 15 übertrieben groß gezeichneten Abstand 59 in Richtung der Senkrechten 39 zwischen den Kontakten 40 und 41 entspricht. Die Kontaktkraft $F_{KP}$ stellt sich jedoch erst ein, nachdem die Membrane den durch den Abstand 59 gegebenen Hub ausgeführt hat. Da die Bewegung der Membrane jedoch durch eine vorstehend genannte pneumatische Drossel gedämpft ist, erfolgt dieser Membranhub relativ langsam, sodaß die Kontakte mit nur langsam ansteigender Kraft geschlossen werden. Dieses langsame Schließen der Kontakte kann zu Kontaktabbrand und zum Verschweißen der Kontakte führen.

Bei geeigneter Auslegung des Gesamtsystemes läßt sich dieser Nachteil jedoch vermeiden. Das Federelement 13 bzw. 13' hat, über die Hebelverhältnisse am Hebel 8 umgerechnet, am Ort der Senkrechten 39 die positive Federrate $R_{13}$. Da der Hin- wie der Rück-Schaltpunkt des Schutzschalters stets > 0 mmWS ( mm Wassersäule ) ist, ist das Federelement 13 bzw. 13' bei Erreichen des Schaltpunktes durch die Membrankraft bereits ausgelenkt. Führt nun der Träger 12 den beschriebenen Schalthub entsprechend dem Abstand 59 aus, dann kann der hierfür nötige Hub ohne Membranbewegung durch Veränderung der Auslenkung des Federelementes 13 bzw. 13' erfolgen.

Für die sich hierbei spontan unmittelbar nach Berühren der Kontakte vor dem Nachfahren der Membrane ergebende Kontaktkraft gilt dann:

$$F_{KS} = \left| (|R_T| - |R_{13}|) * a \right| ;$$

Über geeignete Abstimmung der beiden Federraten kann also erreicht werden, daß unmittelbar nach dem Umschalten des Trägers 12, vor der verlangsamten Bewegung der Membrane, bereits eine für die sichere Kontaktgabe ausreichende Kontaktkraft erreicht wird. Sobald nach dem spontanene Umschalten des Trägers 12 die Membrane ihren geschwindigkeitsgedrosselten Hub 59 ausgeführt hat, wird die Feder 13 bzw. 13' auf die vor dem Umschalten vorhandene Auslenkung gebracht und die volle Kontaktkraft $F_{KP}$ erreicht. Der Betrag der Federrate $R_T$ ist proportional zur Kraft, mit der die Feder 50 auf ihre beidseitigen Befestigungspunkte einwirkt und kann damit über diese Kraft vorbestimmt werden. Im Gegensatz zu der Kraft, mit der der Träger 12 gegen den Anschlag 43 gedrückt wird hängt sie jedoch nicht vom Abstand 53 ab. Die Justage des druckmäßigen Schaltpunktes erfolgt über die Veränderung des Abstandes 53 z.B. durch Verstellen der Schraube 54.

Sinkt nach dem erfolgten Umspringen des Trägers 12 der Druck um einen Wert, der durch $F_{KP}/A_M$ gegeben ist ($A_M$ = Wirkfläche der Membrane 5), erfolgt das Rückspringen des Trägers (stellungsmäßige Rückkehr zum Anschlag 43) und damit des Schutzschalters ebenso sprungartig wie das Einschalten. Der Hysterese (= Druckdifferenz zwischen Ein- und Rückschaltwert) entspricht die Höhe, um die z. B. der Wasserstand im Arbeitsraum einer Waschmaschine unter dem Einfluß der laufenden Laugenpumpe absinken muß, bevor die Pumpe wieder ausgeschaltet wird. Eine Hubreserve, wie bei der Anordnung nach Fig. 14, ist ersichtlich nicht erforderlich. Infolgedessen kann auch eine kostenverursachende Abstandsjustage entfallen. Bei steigendem Druck bleibt der Träger 12 bis zum Erreichen des Schaltwertes des Schutzschalters unbeweglich am Anschlag 43 liegen. Die ungestörte Druckmessung durch den digitalen Drucksensor reicht also ohne Lücke bis an den Schaltwert des Schutzschalters heran. Damit ist die Anordnung frei von den Nachteilen eines Aufbaues nach Fig. 14.

Prinzipiell kann die Zugfeder 50 in der Anordnung nach Fig. 15 auch durch eine Druckfeder ersetzt werden, sofern deren um eine zur Achse 37 parallele Achse frei schwenkbare Befestigung am Gehäuse 38 auf der selben Seite der Achse 37 erfolgt, wie die beschriebene Befestigung am Punkt 55 an dem Träger 12 jedoch weiter von der Achse 37 entfernt ist, als dieser und ebenfalls z.B. über eine Schraube in der Höhe 53 analog der beschriebenen Ausführung mit Zugfeder einstellbar ist. Erfolgt diese Einstellung so, daß sich ebenfalls ein in Fig. 15 gegen den Uhrzeiger gerichtetes Drehmoment 56 in der für den Schaltwert des Schutzschalters notwendigen Stärke ergibt, das den Träger 12 gegen den Anschlag 43 drückt, dann arbeitet die Anordnung wie für die Ausführung mit der Zugfeder 50 beschrieben.

In der vorstehenden Beschreibung wurde zur verbesserten Übersicht davon ausgegangen, daß die Kontakte 40 und 41 so montiert sind, daß sie im gleichen Abstand von der Achse 37 wie die Senkrechte 39 liegen. Hiervon kann mit Vorteil abgewichen werden, indem die Kontakte entweder näher zur Achse 37 oder weiter von ihr entfernt angebracht werden als dem Abstand 57 entspricht. Durch diese Maßnahme kann unter Berücksichtigung der Längenverhältnisse am dann als Hebel eingesetzten Träger 12 der Abstand der geöffneten Kontakte 40 und 41 abweichend vom Membranhub gewählt werden. Dabei ändert sich natürlich auch die Kontaktkraft $F_{KP}$ ( und $F_{KS}$) der Hebelübersetzung entsprechend. Es ist somit möglich, über eine Verschiebung der Einbauposition des Kontaktpaares 40/41 senkrecht zur Bewegungsrichtung der Membrane und zur Achse 37 das Verhältnis zwischen Kontaktkraft und Schalthysterese zu verändern.

Bei feststehender Einbauposition des Kontaktpaares 40/41 kann der Membranhub und der Abstand zwischen den geöffneten Kontakten 40 und 41 beispielsweise über eine Verstellung der Position des Kontaktes 41 gegenüber dem Sensorgehäuse 38 in Richtung der Senkrechten 39 durch eine Stellschraube verändert werden. Hieraus ergibt sich eine Möglichkeit zur Justage der Schaltwert-Hysterese des Schutzschalters.

Weiterhin kann der Anschlag 43 durch einen mit einem eigenen äußeren Anschluß elektrisch leitend verbundenen gegenüber dem Gehäuse der Sensoranordnung ortsfesten Kontakt (Ruhekontakt = RK) ersetzt werden, gegen den im drucklosen Zustand der entsprechend ausgebildete Kontakt 40 durch die auf den Träger 12 wirkende Vorspannung gedrückt wird, sodaß ein Umschalter entsteht. Dieser Umschalter öffnet bei Überschreiten des eingestellten Druckes die Verbindung des Kontaktpaares 40 / RK und schließt statt dessen die Verbindung des Kontaktpaares 40 / 41.

Schließlich kann bei Vorhandensein des Ruhekontaktes der Arbeitskontakt 41 mit den dazugehörigen elektrischen Verbindungen fortgelassen und durch einen mechanischen Anschlag ersetzt werden, der den Hub des Trägers 12 gegen das Gehäuse 38 der Sensoranordnung begrenzt. Damit wird ein bei Überschreiten des eingestellten Druckes öffnender Schalter gebildet, dessen Schalthysterese ebenfalls durch Verstellen der Position dieses Anschlages gegenüber dem Gehäuse der Sensoranordnung justiert werden kann.

Außerdem können mehrere Schutzschalter mit gleicher oder unterschiedlicher Kontaktbestückung in das Gehäuse 38 eingebaut werden, die auf auf eine der beschriebenen Arten durch die druckabhängige Kraft der Membrane 5 betätigt werden und auf den selben oder auf unterschiedliche Druck - Schaltwerte eingestellt sind.

**Patentansprüche**

1. Drucksensor insbesondere für Waschmaschinen, Geschirrspülmaschinen oder dgl. mit

   einer durch den zu erfassenden Druck bewegbaren Membrane (5), die den auf ihre Fläche wirkenden Druck in eine Kraft umsetzt, welche gegen die Federkraft eines Federelements (13, 13') ein bewegbares Teil (8) aus dessen Ruhelage derart auslenkt, daß die Auslenkung der Druckdifferenz zwischen den beiden Seiten der Membrane entspricht,

einem inkrementalen Positionsgeber (16, 19, 34, 35, 36), der die druckabhängige Änderung der Lage des bewegbaren Teils (8) in Bezug auf einen Träger (12) in zwei gegeneinander phasenverschobene digitale Signale umsetzt, und

einer durch die digitalen Signale gesteuerte Vor/Rückwärtszähleinrichtung, deren Zählerstand dem jeweils gerade anliegenden Druck entspricht, gekennzeichnet durch

einen eingebauten, durch eine von einem übermäßigen Druck an der Membrane (5) erzeugte Kraft betätigten Schutzschalter (40, 41).

2. Drucksensor nach Anspruch 1, *dadurch gekennzeichnet, daß* das gegen die Federkraft des Federelementes (13, 13') bewegbare Teil ein an einem Träger (12) angelenkter Hebel (8) ist, der um eine Achse (9,9') schwenkbar ist, die in Abstand von der Senkrechten auf dem Flächenschwerpunkt der Membrane (5) im wesentlichen parallel zur Membranfläche verläuft.

3. Drucksensor nach Anspruch 2, *dadurch gekennzeichnet, daß* der Hebel (8) an dem Träger (12) durch eine Blattfeder angelenkt ist, mittels der der Hebel reibungs- und spielfrei um die Achse (9') schwenkbar ist und die ganz oder teilweise die Funktion des Federelementes (13) übernimmt.

4. Drucksensor nach Anspruch 3, *dadurch gekennzeichnet, daß* der Hebel (8) und die Blattfeder (13') einstückig aus einem flachen Blattfedermaterial gestanzt sind, wobei der Hebel in gewünschten Bereichen (8', 8'') durch Sicken und / oder Abkantungen versteift ist.

5. Drucksensor nach einem der Ansprüche 2 bis 4, *dadurch gekennzeichnet, daß* an dem Hebelarm eine Befestigung für ein mit dem Hebel (8) bewegtes Teil (16) des Positionsgebers (16, 19, 34, 35, 36) einstückig angeformt wird.

6. Drucksensor nach einem der Ansprüche 2 bis 5, *dadurch gekennzeichnet, daß* an dem Hebelarm eine starre Verlängerung (14) angebracht ist, die über die Achse (9, 9') hinausragt und an der ein Gegengewicht (11) anbringbar ist, wodurch der Schwerpunkt des Hebels (8) mit allen verbundenen beweglichen Teilen zur Achse (9, 9') versetzt ist.

7. Drucksensor nach einem der Ansprüche 2 bis 6, *dadurch gekennzeichnet, daß die* Membrane (5) mit dem Hebel (8) über eine Blattfeder gekoppelt ist, deren Einspannkanten im wesentlichen parallel zur Achse (9, 9') liegen und die ohne auszuknicken die Membrankraft auf den Hebel (8) überträgt, wobei die Blattfeder bei Auslenkungen des Hebels verwölbt wird und die Kraft, die die Blattfeder dieser Verwölbung entgegensetzt, in die Federkraft des Federelementes (13, 13') einbezogen ist.

8. Drucksensor nach einem der Ansprüche 2 bis 7, *dadurch gekennzeichnet, daß* der inkrementale Positionsgeber (16, 19, 34, 35, 36) ein an dem bewegbaren Teil (8) befestigtes, auf einem transparenten Substrat durch lichtdurchlässige und undurchlässige Streifen gebildetes Gitter (16), ein gleichartiges, an dem Träger (12) oder dem Sensorgehäuse befestigtes zweites Gitter (19), eine Lichtquelle (34) und zwei Photodetektoren (35, 36) aufweist, die jeweils das von den beiden hintereinanderliegenden Gittern durchgelassene, durch die Streifen der Gitter bei einer gegenseitigen Bewegung derselben hinsichtlich der Intensität modulierte Licht aus der Lichtquelle aufnehmen und zu einem der beiden phasenverschobenen digitalen Signale umsetzen.

9. Drucksensor nach Anspruch 8, *dadurch gekennzeichnet, daß* die Gitterkonstante des am bewegbaren Teil (8) befestigten Gitters (16) nicht über dessen ganze Länge konstant, sondern längs der Senkrechten zu den Streifen ungleich ist, um dadurch einen nichtlinearen Zusammenhang zwischen der Verschiebung der Gitter gegeneinander und der Periodenlänge der Modulation der Intensität des von den beiden Gittern durchgelassenen Lichtes zu erzielen.

10. Drucksensor nach einem der Ansprüche 8 oder 9, *dadurch gekennzeichnet, daß* mindestens eines der beiden Gitter (16, 19) längs einer nicht zu den Streifen parallelen, im wesentlichen parallel zur Verschieberichtung der Gitter verlaufenden Trennlinie in zwei Bereiche (25, 26) unterteilt ist und daß das Gitter in einem der beiden Bereiche in der Gitterebene senkrecht zu den Strefen relativ zum anderen um 1/4 der Gitterkonstante versetzt ist, wobei in jedem der beiden Bereiche, die beide von der Lichtquelle (34) durchleuchtet und vom anderen Gitter überdeckt sind, ein eigener Photodetektor (35, 36) angeordnet ist, der weitgehend nur Licht empfängt, das im zugehörigen Bereich von beiden Gittern durchgelassen ist, wodurch die beiden Photodetektoren (35, 36) bei Verschiebung der beiden Gitter gegeneinander elektrische Signale erzeugen, die um 1/4 der Periodenlänge gegeneinander phasenverschoben sind.

11. Drucksensor nach einem der Ansprüche 8 oder 9, *dadurch gekennzeichnet, daß* eines der beiden Gitter (16, 19) um eine senkrecht zur Gitterebene stehende Achse gegenüber dem anderen Gitter um einen konstanten Winkel (29) von < 90° verdreht angeordnet ist, sodaß in der Durchsicht durch die beiden hintereinander liegenden Gitter geometrische Interferenzmuster entstehen, in denen der Bereich konstanter Helligkeit der Winkelhalbierenden des stumpfen Winkels zwischen den Streifen der beiden Gitter folgt, wobei die beiden Photodetektoren (35, 36) zum Empfangen von durchgelssenem Licht für das Erzeugen von um 1/4 der Periodenlänge phasenverschobenen Signalen bei Verschiebung der Gitter unter Konstanthaltung des Winkels (29) gegeneinander so angebracht sind, daß sie Bereiche der Interferenzmuster erfassen, die senkrecht zu den Interferenzstreifen gemessen um n/4 der Ortsperiodenlänge der Interferenzstreifen voneinander entfernt sind, wobei n ungerade und ganzzahlig, vorzugsweise "1" ist.

12. Drucksensor nach einem der Ansprüche 8 oder 9, *dadurch gekennzeichnet, daß* die beidenGitter (16, 19) unterschiedliche Gitterkonstanten haben, sodaß bei im wesentlichen paralleler Anordnung der Streifen des einen Gitters relativ zu denen des anderen Interferenzstreifen entstehen, die parallel zu den Gitterstreifen liegen und sich bei Verschiebung der Gitter gegeneinander senkrecht zu den Gitterstreifen verschieben, wobei die Ortsperiodenlänge dieser Interferenzstreifen vom Verhältnis der beiden Gitterkonstanten abhängt, und daß in diesem Interferenzstreifenfeld die beiden Photodetektoren (35, 36) so gegeneinander versetzt angebracht sind, daß ihr Abstand senkrecht zu den Gitterstreifen n/4 der Ortsperiodenlänge der Interferenzstreifen beträgt, wobei n eine ungerade ganze Zahl, vorzugsweise "1" ist, und dadurch die beiden Photodetektoren bei Verschiebung der beiden Gitter gegeneinander Signale erzeugen, die um 1/4 der Periodenlänge gegeneinander phasenverschoben sind.

13. Drucksensor nach einem der Ansprüche 8 bis 12, *dadurch gekennzeichnet, daß* beide Gitter (16, 19) die Form eines Zylindermantels oder Kegelmantels haben und die Zylinder- bzw. Kegelachse des am Hebel (8) befestigten Gitters im wesentlichen mit der Achse (9, 9') des Hebels zusammenfällt, das andere Gitter am Träger 12 oder am Gehäuse der Sensoranordnung so befestigt ist, daß seine Achse zur Achse (9, 9') im wesentlichen parallel steht und die Gitterstreifen nicht in einer senkrecht zu dieser Achse stehenden Ebene liegen.

14. Drucksensor nach Anspruch 13, *dadurch gekennzeichnet, daß* das ortsfeste Gitter (19) plan ist, während das mit dem Hebel (8) bewegbare Gitter (16) zylinder- bzw. kegelmantelförmig ist.

15. Drucksensor nach einem der Ansprüche 8 bis 12, *dadurch gekennzeichnet, daß* die beiden Gitter eben und so am Hebel (8) bzw. am Träger (12) oder am Sensorgehäuse befestigt sind, daß ihre Flächen senkrecht zur Achse (9, 9') stehen, daß die Gitterstreifen radial auf diese Achse zulaufen oder einen zu ihr konzentrischen Kreis tangieren, dessen Radius kleiner ist, als der Abstand des geometrischen Arbeitsbereiches der Photodetektoren von der Achse, wobei anstelle eines Längenmaßes für die Gitterkonstante ein Teilungswinkel tritt und entweder mindestens eines der Gitter in zwei Bereiche mit in Umfangsrichtung versetztem Streifenmuster geteilt ist oder die beiden Gitter so ausgeführt sind, daß sich die Gitterstreifen unter einem Winkel schneiden und die Interferenzmuster die Form von konzentrischen Kreisen haben, deren Durchmesser sich bei Verdrehen der Gitter gegeneinander verändert oder die beiden Gitter mit unterschiedlicher Gitterkonstante ausgeführt sind und die entstehenden Interferenzmuster parallel zu den Gitterstreifen verlaufen und bei Verdrehen der Gitter gegeneinander um die Drehachse rotieren, und daß die Lichtquelle und die Photodetektoren so angeordnet sind, daß bei Verdrehung des beweglichen Gitters um seinen Mittelpunkt Photodetektoren Signale erzeugen, die bei Verdrehung der beiden Gitter gegeneinander um 1/4 der Periodenlänge phasenverschoben sind.

16. Drucksensor nach Anspruch 15, *dadurch gekennzeichnet, daß* das bewegliche Radialgitter, das identisch mit dem unbeweglichen ausgeführt sein kann, nicht konzentrisch zum unbeweglichen, sondern mit einem Mittelpunktsversatz befestigt ist, sodaß dadurch in einem begrenzten geometrischen Bereich, dessen Mitte winkelmäßig gegenüber diesem Mittelpunktsversatz um 90° verdreht liegt, Interferenzmuster entstehen, die sich bei Verdrehung der beiden Gitter gegeneinander radial verschieben, wobei in diesem begrenzten geometrischen Bereich die beiden Photodetektoren so befestigt sind, daß bei Verdrehung der beiden Gitter gegeneinander die um 1/4 der Periodenlänge phasenverschobenen Signale erzeugt werden.

17. Drucksensor nach einem der Ansprüche 8 bis 16, *dadurch gekennzeichnet, daß* die Gitterstreifen reflektierend ausgebildet sind und sowohl die Lichtquelle (34) wie die Photodetektoren (35, 36) auf der selben Seite der Anordnung der beiden Gitter angeordnet sind.

18. Drucksensor nach einem oder mehreren der Ansprüche 8 bis 16, *dadurch gekennzeichnet, daß* die Anordnung der beiden Gitter mit einem diffus oder gerichtet reflektierenden Element hinterlegt ist und sowohl die Lichtquelle (34) als auch die Photodetektoren (35, 36) auf der selben Seite der Anordnung der beiden Gitter angeordnet sind.

19. Drucksensor nach einem der Ansprüche 8 bis 18, *dadurch gekennzeichnet, daß* in den Lichtweg von der Lichtquelle über das Gitterpaar (16, 19) zu den Photodetektoren (34, 35) optische Bauelemente wie Spiegel, Linsen, Prismen usw. eingebaut sind.

20. Drucksensor nach einem der Ansprüche 8 bis 19, *dadurch gekennzeichnet, daß* die Lichtquelle (34) zusammen mit den Photodetektoren (35, 36) auf dem Träger (12) befestigt ist.

21. Drucksensor nach einem der Ansprüche 8 bis 19, *dadurch gekennzeichnet, daß* die Lichtquelle (34) zusammen mit den Photoempfängern (35, 36) auf dem Gehäuse (38) des Sensors befestigt ist und der Träger (12) gegenüber dem Gehäuse beweglich ausgeführt ist, wobei keine flexible elektrische Verbindung vom Gehäuse bzw. externen relativ zum Gehäuse ortsfesten Anschlüssen zur Lichtquelle und / oder den Photodetektoren erforderlich ist.

22. Drucksensor nach einem der Ansprüche 8 bis 19, *dadurch gekennzeichnet, daß* die Lichtquelle (34) an dem Träger (12) und die Photodetektoren (35, 36) an dem Gehäuse (38) des Sensors bzw. die Lichtquelle an dem Gehäuse und die Photodetektoren auf dem Träger befestigt sind.

23. Drucksensor nach einem der Ansprüche 8 bis 22, *dadurch gekennzeichnet, daß* die Lichtquelle (34) durch eine Strom- oder Spannungsquelle mit bestimmter Temperaturabhängigkeit so betrieben ist, daß bei unveränderter Position der Gitter (16, 19) gegeneinander das Ausgangssignal der Photodetektoren (35, 36) innerhalb des Betriebstemperaturbereiches des Sensors unabhängig von der Temperatur weitgehend konstant bleibt, wodurch die Temperaturabhängigkeit der Lichtquelle und der Photoempfänger kompensiert ist, wobei typgleiche Photodetektoren oder solche mit weitgehend gleicher Temperaturabhängigkeit eingesetzt sind.

24. Drucksensor nach einem der Ansprüche 8 bis 22, *dadurch gekennzeichnet, daß* die Strom- oder Spannungsquelle zum Betrieb der Lichtquelle eine Regelschaltung ist, der im Rückführungszweig das Ausgangssignal eines weiteren Photodetektors zugeführt wird, der so eingebaut ist, daß er durch die Lichtquelle direkt oder indirekt beleuchtet und die auf ihn treffende Intensität nicht durch die Stellung der Gitter beeinflußt ist, wobei als weiterer Photodetektor ein Typ mit gleicher Temperaturabhängigkeit wie für den Empfang des über die Gitter modulierten Lichtes eingesetzt ist.

25. Drucksensor nach einem der Ansprüche 1 bis 24, *dadurch gekennzeichnet, daß* die elektronische Vor- / Rückwärtszähleinrichtung ein entsprechend programmierter Mikrocomputer und / oder in das Gehäuse der Sensoranordnung fest eingebaut ist oder ein entsprechend programmierter, bereits vorhandener Mikrocomputer ist, der bei der Programmsteuerung z.B. einer Wasch- oder Geschirrspülmaschine oder dgl. verwendet ist.

26. Drucksensor nach einem der Ansprüche 1 bis 25, *dadurch gekennzeichnet, daß* zur Dämpfung von kurzfristigen Druckschwankungen in die pneumatische Verbindung zum Raum (2) über der Membrane (5) eine Verengung (6) eingebracht ist, die als pneumatische Drossel und in Verbindung mit dem dahinterliegenden Volumen als Tiefpass für Druckschwankungen wirkt, dessen Zeitkonstante so eingestellt ist, daß das bewegbare Teil (8) durch die restlichen Druckschwankungen im Membranraum noch geringe Bewegungen um die zum Mittelwert des Druckes gehörige Position ausführt.

27. Drucksensor nach einem der Ansprüche 1 bis 26, *dadurch gekennzeichnet, daß* bei der Erfassung von zeitlich schwankenden Druckwerten aus mehreren, in zeitlichem Abstand erfaßten Druckwerten ein Mittelwert errechnet wird, wobei bei periodischen oder annähernd periodischen Druckschwankungen mehrere über eine oder mehrere Perioden zeitlich verteilt erfaßte Werte zur Mittelung herangezogen werden, wodurch der Einfluß von Reibung in und zwischen bewegten Teilen des Sensors weitgehend eliminiert wird.

28. Drucksensor nach Anspruch 27, *dadurch gekennzeichnet, daß* bei der Berechnung des Mittelwertes aus den Einzelwerten die Meßwertauflösung dadurch verbessert wird, daß das Mittelungsergebnis um eine entsprechende Zahl von Binärstellen genauer berechnet wird als dem primären Zählschritt entspricht und dadurch das Ergebnis der Mittelung auf Halb-, Viertel- usw.- Zählschritte genau errechnet wird, wodurch sich eine signifikante Verbesserung der Auflösung ergibt.

29. Drucksensor nach einem der Ansprüche 1 bis 28, *dadurch gekennzeichnet, daß* durch einen Eichwertspeicher, in dem Abweichungen von bei einer Eichung ermittelten Druckwerten von den zugehörigen Ist-Druckwerten zum Korrigieren von erfassten Druckwerten permanent gespeichert sind und daß der Eichwertspeicher in den Sensor eingebaut oder diesem fest zugeordnet ist.

30. Drucksensor nach Anspruch 29, *dadurch gekennzeichnet, daß* in dem Eichwertspeicher Zahlenwerte gespeichert sind, die die Eckpunkte eines den Abweichungsverlauf annähernd darstellenden Polygonzuges beinhalten oder Parameter einer dem Abweichungsverlauf angenäherten mathematischen Funktion sind

31. Drucksensor nach einem der Ansprüche 1 mit 30, *dadurch gekennzeichnet, daß* die Membrankraft durch eine Hebelanordnung auf mindestens zwei Kraftabgabepunkte verteilt ist, wobei an einem Kraftabgabepunkt das druckabhängig bewegbare Teil (8) mit dem Federelement (13, 13') und dem inkrementalen Positionsgeber (16, 19, 34, 35, 36) angekoppelt ist, an einem anderen ein vorzugsweise über eine einstellbare Federkraft einer Vorspannfeder kraftmäßig gegen einen am Gehäuse des Sensors festen Anschlag vorgespannter Schalter, dessen Schaltstellung sich ändert, wenn der über die Hebelanordnung auf den Schalter übertragene Teil der Membrankraft die gegengerichtete kraftmäßige Vorspannung übersteigt.

32. Drucksensor nach einem der Ansprüche 1 bis 30, *dadurch gekennzeichnet, daß* der Träger (12), an dem das druckabhängig bewegbare unter der Kraftwirkung des Federelementes (13, 13') stehende Teil (8) gelagert ist, mittels eines Lagers, vorzugsweise eines Schneiden- oder Blattfederlagers am Gehäuse (38) des Sensors um eine zur Membranfläche im wesentlichen parallele, in Anstand von der Senkrechten (39) auf dem Flächenschwerpunkt der Membrane verlaufende Achse (37) schwenkbar gelägert ist und durch die vorzugsweise einstellbare Federkraft einer Vorspannfeder (42) gegen einen festen Anschlag (43) am Gehäuse gedrückt ist und daß der Schutzschalter (40, 41) durch die Schwenkbewegung des Trägers in Bezug auf das Gehäuse betätigt wird, die entsteht, wenn die über das bewegbare Teil und das Federelement übertragene Membrankraft an dem Träger die gegengerichtete Federkraft der Vorspannfeder übersteigt.

33. Drucksensor nach Anspruch 32, *dadurch gekennzeichnet, daß* die Schwenkbewegung des Trägers (12) gegenüber dem Gehäuse (38) des Sensors bewirkt, daß ein Kontakt (40) des Schutzschalters aus seiner Ruhelage in Richtung zu einem am Gehäuse ortsfesten Kontakt (41) bewegt wird, bis beide Kontakte aufeinander aufliegen und damit eine elektrisch leitende Verbindung hergestellt ist.

34. Drucksensor nach Anspruch 32 oder 33, *dadurch gekennzeichnet, daß* der Anschlag (43) des Trägers (12) im Gehäuse (38) einen Ruhekontakt des Schutzschalters bildet, der beim Andrücken des Trägers durch die Vorspannfeder (42) mit einem zusammen mit dem Träger beweglichen Kontakt (40) in elektrisch leitender Verbindung ist und durch die Schwenkbewegung des Trägers von dem beweglichen Kontakt getrennt wird, wobei ein am Gehäuse ortsfester Anschlag die vom Anschlag (43) wegführende Bewegung des Trägers begrenzt, wenn kein ortsfester Kontakt (41) vorhanden ist.

35. Drucksensor nach Anspruch 32, *dadurch gekennzeichnet, daß* der durch die Schwenkbewegung des Trägers (12) gegenüber dem Gehäuse (38) betätigte Schutzschalter ein bekannter Schnappschalter mit Schaltweghysterese ist, wobei die Rückkehr des Schalters in die Ruhestellung erst erfolgt, nachdem der Druck um einen von der Hysterese des Schalters abhängigen Wert gegenüber dem Druck abgesunken ist, bei dem der Einschaltvorgang ausgelöst wurde.

36. Drucksensor nach einem der Ansprüche 32 bis 34, *dadurch gekennzeichnet, daß* die Vorspannung, durch die der schwenkbar gelagerten Träger (12) gegen den Anschlag (43) im Gehäuse (38) gedrückt ist, durch eine Federanordnung gegeben ist, deren Vorspannkraft unter einem Angriffswinkel auf den Träger wirkt, dessen Größe sich bei der Schwenkbewegung des Trägers verändert, wodurch die auf den Träger wirkende, in Richtung auf den Anschlag gerichtete Kraftkomponente mit zunehmendem Abstand des Trägers vom Anschlag abnimmt.

37. Drucksensor nach Anspruch 36, *dadurch gekennzeichnet, daß* die Federanordnung aus einer Zugfeder (50) besteht, deren eines Ende an Punkt (55) am Träger (12) reibungsarm um eine im wesentlichen zur Achse (37) parallele Achse schwenkbar befestigt ist und deren anderes Ende um eine zur Achse (37) im wesentlichen parallel stehende Achse reibungsarm schwenkbar auf der anderen Seite der Achse (37) an Punkt (51) am Gehäuse (38) befestigt ist, wobei der senkrechte Abstand (53) dieses zweiten Befestigungspunktes von der verlängerten Verbindungslinie zwischen der Achse (37) und dem Befestigungspunktpunkt (55) vorzugsweise über eine Schraube (54) veränderlich eingestellt ist.

38. Drucksensor nach Anspruch 36, *dadurch gekennzeichnet, daß* die Federanordnung aus einer Druckfeder besteht, deren eines Ende an Punkt (55) am Träger (12) reibungsarm um eine im wesentlichen zur Achse (37) parallele Achse schwenkbar befestigt ist und deren anderes Ende um eine zur Achse (37) im wesentlichen parallel stehende Achse reibungsarm schwenkbar auf der selben Seite der Achse (37) am Gehäuse (38) befestigt ist, wobei dieser zweite Befestigungspunkt weiter von der Achse (37) entfernt ist als der Punkt (55) und sein senkrechter Abstand von der verlängerten Verbindungslinie zwischen der Achse (37) und dem Befestigungspunktpunkt (55) vorzugsweise über eine Schraube veränderlich eingestellt ist.

**39.** Drucksensor nach einem der Ansprüche 36 bis 38, *dadurch gekennzeichnet, daß* die Vorspannkraft, mit der die Zug- oder Druckfeder eingebaut ist und auf ihre beidseitigen Befestigungspunkte einwirkf, so auf die Dimensionierung des Federelementes (13, 13') abgestimmt ist, daß der Stellungswechsel des Trägers (12) vom Anschlag (43) bis zum Aufeinandertreffen der Kontakte (40, 41) bei Überschreiten der voreingestellten Druckdifferenz zwischen den beiden Seiten der Membrane schlagartig erfolgt, ohne daß sich innerhalb der Schatzeit die Hubposition der Membrane wesentlich verändert.

**40.** Drucksensor nach einem der Ansprüche 32 bis 39, *dadurch gekennzeichnet, daß* die Feder, die die Vorspannung des Trägers (12) in Richtung auf den Anschlag (43) erzeugt, oder das Gelenk z. B. das Schneiden- oder Blattfederlager mit dem der Träger um die Achse (37) am Gehäuse (38) schwenkbar befestigt ist als flexible elektrisch leitende Verbindung zwischen dem Kontakt (40) und dem äußeren Anschluß (45) eingesetzt ist.

**41.** Drucksensor nach einem der Ansprüche 36 bis 40, *dadurch gekennzeichnet, daß* die Schalthysterese des Schutzschalters einstellbar durch den vorzugsweise z. B. über die Stellung einer Schraube bestimmten Schwenkwinkel gegeben ist, den der Träger (12) vom Anschlag (43) bis zum Aufeinandertreffen der Kontakte (40, 41) oder zum Autreffen auf einen anderen, am Gehäuse (38) ortsfesten Anschlag zurücklegt.

**42.** Drucksensor nach einem der Ansprüche 32 bis 41, *dadurch gekennzeichnet, daß* mehrere Schutzschalter mit gleicher oder unterschiedlicher Kontaktbestückung in das Gehäuse des Sensors eingebaut sind, die bei der gleichen oder bei unterschiedlichen Druckdifferenzen zwischen den beiden Seiten der Membrane (5) schalten.

**43.** Drucksensor nach einem der Ansprüche 1 bis 42, *dadurch gekennzeichnet, daß* mit dem Gehäuse (38) der Sensoranordnung ein oder mehrere mehrpolige(r) Steckverbinder mit entsprechender Polzahl und / oder Lötstifte fest verbunden ist / sind, über den / die elektrische Verbindungen zu und von der Sensoranordnung, in das Gehäuse eingebauten elektronischen Bauteilen oder Baugruppen und / oder dem Schutzschalter(n) geführt werden.

## Claims

**1.** Pressure sensor, in particular for washing machines, dishwashers or the like, comprising

a membrane (5), which is movable by a pressure to be detected and which converts a pressure acting on its surface into a force which deflects a movable part (8) from its idle position against the springload of a spring element (13, 13') in such a manner that the deflection corresponds with the pressure difference between both sides of the membrane,

an incremental position transducer (16, 19, 34, 35, 36) which converts the pressure-dependent change of position of the movable part (8) relative to a support (12) into two digital signals which are phase-shifted relative to each other, and

a forward/backward counting device, which is controlled by the digital signals and the reading of which corresponds with a currently applied pressure, **characterised by**

a built-in protective switch (40, 41) which is operated by a force generated by excessive pressure on the membrane (5).

**2.** Pressure sensor according to Claim 1, **characterised in that** the part which is movable against the springload of the spring element (13, 13') is a lever (8), which is hinged onto a support (12) and pivotal around an axis (9, 9') which extends at a distance from the vertical on the surface centre of the membrane (5) essentially parallel to the membrane surface.

**3.** Pressure sensor according to Claim 2, **characterised in that** the lever (8) is hinged to the support (12) by a leafspring by means of which the lever is pivotal free of friction and play around the axis (9') and which fully or partially takes over the function of the spring element (13).

**4.** Pressure sensor according to Claim 3, **characterised in that** the lever (8) and the leafspring (13') are cut of a flat leafspring material, and the lever is reinforced in specified areas (8', 8") by beading and/or folding.

**5.** Pressure sensor according to one of Claims 2 to 4, **characterised in that** onto the lever arm is integrated a mounting for a part (16), which is moved with the lever (8), of the position transducer (16, 19, 34, 35, 36).

**6.** Pressure sensor according to one of Claims 2 to 5, **characterised in that** onto the lever arm is fitted a rigid extension (14) which protrudes over the axis (9, 9') and to which a counterweight (11) can be attached, thus offsetting the centre of gravity of the lever (8) with all connected movable parts toward the axis (9, 9').

**7.** Pressure sensor according to one of Claims 2 to 6, **characterised in that** the membrane (5) is coupled to the lever (8) via a leafspring the clamping edges of which lie essentially parallel to the axis (9, 9') and which transfers without kinking the membrane force onto the lever (8); and during deflections of the lever, the leafspring is bulged and the force offered by the leafspring in opposition to said bulging is incorporated into the spring force of the spring element (13, 13').

**8.** Pressure sensor according to one of Claims 2 to 7, **characterised in that** the incremental position transducer (16, 19, 34, 35, 36) comprises a lattice (16) which is mounted on the movable part (8) and formed on a transparent substrate by light-permeable and impermeable strips, a second lattice (19) of the same type which is mounted on the support (12) or the sensor housing, a light source (34) and two photo detectors (35, 36), which respectively receive from the light source the light which has been passed through the two lattices positioned one behind the other and modulated relative to intensity by the stripes of the lattices during a counter-movement of same and convert it into one of the two phase-shifted digital signals.

**9.** Pressure sensor according to Claim 8, **characterised in that** the lattice constant of the lattice (16) mounted on the movable part (8) is not constant over its full length but along the vertical unequal relative to the stripes in order to thus achieve a nonlinear relation between offset of the lattices against each other and the period length of the modulation of the intensity of light passed through by both lattices.

**10.** Pressure sensor according to one of Claims 8 or 9, **characterised in that** at least one of the two lattices (16, 19) is along a separating line, which is not parallel with the stripes and essentially extends parallel to the offset direction of the lattices, divided into two areas (25, 25), and the lattice is in one of the two areas in the lattice plane offset vertically to the stripes relative to the other by 1/4 of the lattice constant, and in each of the two areas, which are both transluminated by the light source (34) and covered by the other lattice, is configured an associated photo detector (35, 36) which substantially only receives light which has been passed through the associated area of both lattices, and the two photo detectors (35, 36) generate during offset of both lattices against each other electrical signals which are phase-shifted relative to each other by 1/4 period length.

**11.** Pressure sensor according to one of Claims 8 or 9, **characterised in that** one of the two lattices (16, 19) is arranged to be rotated relative to the other lattice by a constant angle (29) of <90° around an axis vertically to the lattice plane so that in looking through the two lattices, which are positioned one behind the other, geometric interference patterns develop in which the area of constant brightness follows angle halving of the obtuse angle between the stripes of both lattices, and the two photo detectors (35, 36) are, for the purpose of receiving passed through light for generating signals which are phase-shifted by 1/4 of the period length with offset lattices whilst keeping the angle (29) constant relative to each other, positioned in such a manner that they detect areas of the interference patterns which are, when measured vertically to the interference strips, distanced from each other by n/4 of the local period length of the interference stripes, where n is an uneven or full number, preferably "1".

**12.** Pressure sensor according to one of Claims 8 or 9, **characterised in that** the two lattices (16, 19) have different lattice constants, so that, with essentially parallel arrangement of the stripes of the one lattice relative to those of the other, interference stripes develop which lie parallel to the lattice stripes and which, with displacement of the lattice relative to each other, offset vertically to the lattice stripes, and the local period length of these interference stripes depends on the ratio of both lattice constants, and in this interference stripe field both photo detectors (35, 36) are offset relative to each other in such a manner that their distance vertically to the lattice stripes equals n/4 of the local period length of the interference stripes, where n is an uneven full number, preferably "1", causing both photo detectors to generate during displacement of both lattices relative to each other signals which are phase-shifted against each other by 1/4 of the period length.

**13.** Pressure sensor according to one of Claims 8 to 12, **characterised in that** both lattices (16, 19) have the form of a cylinder casing or cone casing, and the cylinder axis or cone axis of the lattice mounted on the lever (8) essentially coincides with the axis (9, 9') of the lever, the other lattice is mounted on support 12 or on the housing of the sensor arrangement in such a manner that its axis is substantially parallel to the axis (9, 9') and the lattice stripes are not in a plane lying vertically to said axis.

**14.** Pressure sensor according to Claim 13, **characterised in that** the locally fixed lattice (19) is plane, whilst the lattice (16), which is movable by way of the lever (8), is in the shape of a cylinder casing or a cone casing.

**15.** Pressure sensor according to one of Claims 8 to 12, **characterised in that** both lattices are evenly mounted on the lever (8) or on the support (12) or on the sensor housing so that their surfaces stand vertically to the axis (9, 9'), that the lattice stripes run radially towards this axis or tangentially to a thereto concentric circle the radius of which is smaller than the distance of the geometrical operational area of the photo detectors from the axis, and a longitudinal measure for the lattice constant is replaced by a dividing angle, and either at least one of the lattices is divided into two areas with peripherally offset stripe pattern or both lattices are designed in such a manner that the lattice stripes intersect at an angle and the interference patterns have the shape of concentric circles the diameter of which changes when rotating the lattices relative to each other or the two lattices are designed with different lattice constant and developing interference patterns extend parallel to the lattice stripes and rotate against each other around the rotary axis when turning the lattices, and the light source and the photo detectors are configured in such a manner that on rotation of the movable lattice around its centre point the photo detectors generate signals which on rotation of both lattices against each other are phase-shifted by 1/4 period length.

**16.** Pressure sensor according to Claim 15, **characterised in that** the movable radial lattice, which may be identical to the fixed lattice, is not mounted concentrically to the fixed one but with a centre of gravity offset, so that in a defined geometrical area, the centre of which is angled by 90° relative to said centre of gravity offset, interference patterns develop which radially displace themselves against each other during rotation of both lattices; in said geometric area, both photo detectors are mounted in such a manner that signals phase-shifted by 1/4 period length can be generated during rotation of both lattices.

**17.** Pressure sensor according to one of Claims 8 to 16, **characterised in that** the lattice stripes are of reflective design and both the light source (34) and the photo detectors (35, 36) are configured on the same side of the arrangement of both lattices.

**18.** Pressure sensor according to one or more of Claims 8 to 16, **characterised in that** the arrangement of both lattices is backed by a diffused or focused reflecting element, and both the light source (34) and the photo detectors (35, 36) are configured on the same side of the arrangement of both lattices.

**19.** Pressure sensor according to one of Claims 8 to 18, **characterised in that** optical assembly components, such as mirrors, lenses, prisms etc., are built into the lightpath from the light source via the lattice pair (16, 19) to the photo detectors (34, 35).

**20.** Pressure sensor according to one of Claims 8 to 19, **characterised in that** the light source (34) is together with the photo detectors (35, 36) mounted on the support (12).

**21.** Pressure sensor according to one of Claims 8 to 19, **characterised in that** the light source (34) is together with the photo receivers (35, 36) mounted on the housing (38) of the sensor, and the support (12) is designed to be movable relative to the housing, and no flexible electrical connection between the housing or the external connections, which are locally fixed relative to the housing, and the light source and/or the photo detectors are required.

**22.** Pressure sensor according to one of Claims 8 to 19, **characterised in that** the light source (34) is mounted on the support (12) and the photo detectors (35, 36) are mounted on the housing (38) of the sensor or the light source is mounted on the housing and the photo detectors on the support.

**23.** Pressure sensor according to one of Claims 8 to 22, **characterised in that** the light source (34) is operated by a voltage or current source with specified temperature dependency in such a manner that, with unchanged position of the lattices (16, 19) relative to each other, the output signal of the photo detectors (35, 36) remains substantially constant within the operating temperature range of the sensor and independently from the temperature, thereby compensating the temperature dependency of the light source and the photo receivers, and photo detectors of identical type or those of substantially equal temperature dependency, are applied.

**24.** Pressure sensor according to one of Claims 8 to 22, **characterised in that** the voltage or current source for operating the light source is a control circuit which is in the return branch fed the output signal of an additional photo detector which is installed in such a manner that it is directly or indirectly illuminated by the light source and the intensity it is hit with is not affected by the position of the lattices, and the additional photo detector is a type with identical temperature dependency as is used for receiving the light which has been modulated via the lattices.

**25.** Pressure sensor according to one of Claims 1 to 24, **characterised in that** the electronic upward/downward counting device is a respectively programmed microcomputer and/or fixed in the housing of the sensor arrangement or a respectively programmed already present microcomputer in use for program control, for example of a washing or dishwashing machine or the like.

26. Pressure sensor according to one of Claims 1 to 25, **characterised in that,** for the purpose of absorbing short-term pressure fluctuations, a narrowing (6) is placed in the pneumatic connection to the area (2) above the membrane (5) which acts as a pneumatic throttle and in conjunction with the volume therebehind as a low-pass for pressure fluctuations, the time constant of which is set in such a manner that the movable part (8) still performs small movements around the position which is part of the mean pressure value by way of remaining pressure fluctuations in the membrane area.

27. Pressure sensor according to one of Claims 1 to 26, **characterised in that** with detection of temporally fluctuating pressure values a mean value is calculated from a plurality of pressure values detected in temporal intervals, and in periodic or virtually periodic pressure fluctuations a plurality of values detected temporally spaced via one or more periods are utilised for averaging, and the influence of friction in and between moved parts of the sensor is substantially eliminated.

28. Pressure sensor according to Claim 27, **characterised in that** in calculating the mean value from individual values the measuring value resolution is improved in that the averaging result is calculated more precisely by a corresponding number of binary positions than corresponds with the primary numerical step, and thus the result of averaging is calculated accurately to half, quarter etc. numerical steps, which results in a significant improvement of resolution.

29. Pressure sensor according to one of Claims 1 to 28, **characterised in that** by means of a calibrating memory, in which deviations of pressure values determined during calibration from associated actual pressure values are permanently stored for correction detected pressure values, and that the calibration memory is built into the sensor or fixedly associated thereto.

30. Pressure sensor according to Claim 29, **characterised in that** in the calibration memory are stored numerical values which include the corner points of a polygonal slope which virtually illustrates the deviation course or parameters of a mathematical function approximated to the course of deviation.

31. Pressure sensor according to one of Claims 1 with 30, **characterised in that** the membrane force is distributed via a lever arrangement to at least two force release points, and on one force release point the pressure-dependently movable part (8) is coupled with the spring element (13, 13') and the incremental position transducer (16, 19, 34, 35, 36), and on another a switch which is preferably pretensioned via an adjustable springload of a clamping spring against a fixed abutment on the housing of the sensor, the switch position of which changes when the portion of the membrane force which is transferred to the switch via the lever arrangement exceeds the counter-directional preclamping force.

32. Pressure sensor according to one of Claims 1 to 30, **characterised in that** the carrier (12), on which the pressure-dependently movable part (8) which is under the load of the spring element (13, 13') is mounted, is mounted by means of a mounting, preferably an intersecting or leafspring mounting, on the housing (38) of the sensor so as to be pivotal around an axis (37) which lies essentially parallel to the membrane surface and extends at a distance from the vertical (39) on the surface centre of the membrane, and it is pushed by a preferably adjustable springload of a pretensioning spring (42) against a fixed abutment (43) on the housing, and the protective switch (40, 41) is operated by the pivotal movement of the support relative to the housing which develops when the membrane force transferred via the movable part and the spring element exceeds the counter-directional springload of the pretensioning spring on the carrier.

33. Pressure sensor according to Claim 32, **characterised in that** the pivotal movement of the support (12) relative to the housing (38) of the sensor causes a contact (40) of the protective switch to be moved from its idle position in the direction of a contact (41) which is fixed on the housing until both contact lie on top of each other, thus having established an electrically conducting connection.

34. Pressure sensor according to Claim 32 or 33, **characterised in that** the abutment (43) of the support (12) establishes in the housing (38) an idle contact of the protective switch which is in electrically conducting connection when the support is pressed by a pretensioning spring (42) with a contact (40), which is movable together with the support, and separated from the movable contact by the pivotal movement of the support, and an abutment which is fixed on the housing defines the movement of the support which leads away from the abutment (43) in the absence of a fixed contact (41).

35. Pressure sensor according to Claim 32, **characterised in that** the protective switch, which is operated by a pivotal movement of the support (12) relative to the housing (38), is a conventional quick-action switch with switch-path hysteresis, and the return of of the switch into its idle position takes place only after the pressure has dropped by a value dependent on the hysteresis of the switch relative to the pressure which triggered the switch-on process.

36. Pressure sensor according to one of Claims 32 to 34, **characterised in that** the pretensioning by means of which the pivotally mounted support (12) is pushed against the abutment (43) in the housing (38) is given by a spring arrangement the pretensioning force of which acts under an engagement angle on the support the size of which changes during a pivotal movement of the support, causing the force component which is oriented in the direction of the abutment and acting on the support to reduce with increasing distance of the support from the abutment.

37. Pressure sensor according to Claim 36, **characterised in that** the spring arrangement consists of a tension spring (50), the one end of which is mounted at point (55) on the support (12) so as to be pivotal with low friction around an axis, which lies essentially parallel with the axis (37), and the other end of which is mounted on the other side of the axis (37) at point (51) on the housing (38) so as to be pivotal with low friction around an axis, which lies essentially parallel to the axis (37), and the vertical distance (53) of this second mounting point from the extended connecting line between the axis (37) and the mounting point (56) is preferably set to be adjustable via a bolt (54).

38. Pressure sensor according to Claim 36, **characterised in that** the spring arrangement is composed of a pressure spring, the one end of which is mounted at point (55) on the support (12) so as to be pivotal with low friction around an axis, which lies essentially parallel with the axis (37), and the other end of which is mounted on the same side of the axis (37) on the housing (38) so as to be pivotal with low friction around an axis, which lies essentially parallel to the axis (37), and this second mounting point is farther removed from the axis (37) than the point (55), and its vertical distance from the extended connecting line between the axis (37) and the mounting point (55) is preferably set to be adjustable via a bolt.

39. Pressure sensor according to one of Claims 36 to 38, **characterised in that** the pretensioning force with which the tension spring or pressure spring is installed and acts on its twosided mounting points, is matched to the dimensions of the spring element (13, 13') in such a manner that a change in position of the support (12) from the abutment (43) until the contacts (40, 41) meet is substantially and instantaneously changed when exceeding the preset pressure difference between both sides of the membrane without a substantial change of the lifting position of the membrane within the switching period.

40. Pressure sensor according to one of Claims 32 to 39, **characterised in that** the spring, which generates the pretensioning of the support (12) in the direction of the abutment (43), or the hinge, for example the intersecting or leafspring mount with which the support is mounted so as to be pivotal around the axis (37) on the housing (38), is used as a flexible electrically conducting connection between the contact (40) and the external connection (45).

41. Pressure sensor according to one of Claims 36 to 40, **characterised in that** the switch hysteresis of the protective switch is adjustable by the pivotal angle, which is preferable determined for example via the position of a bolt and passed by the support (12) from the abutment (43) until the contacts (40, 41) meet up or until they make contact with another abutment fixed to the housing (38).

42. Pressure sensor according to one of Claims 32 to 41, **characterised in that** a plurality of protective switches with identical or different contacts are built into the housing of the sensor, which switch during identical or different pressure differences between both sides of the membrane (5).

43. Pressure sensor according to one of Claims 1 to 42, **characterised in that** to the housing (38) of the sensor arrangement are firmly connected one or more multi-pole plug connectors with a respective number of poles and/or soldering pins by means of which electrical connections are ducted to and from the sensor arrangement, electronic components or modules and/or protective switches built into the housing.

## Revendications

1. Capteur de pression destiné en particulier à des lave-linge, des lave-vaisselle ou similaires, équipé d'une membrane (5) mobile sous l'effet de la pression à enregistrer, qui convertit la pression agissant sur sa surface en une force qui dévie dans le sens contraire à la force élastique d'un élément de ressort (13, 13') une partie (8) mobile de sa position de repos de telle façon que la déviation correspond à la différence de pression entre les deux côtés de la membrane, d'un capteur de position (16, 19, 34, 35, 36) incrémentiel, qui convertit la variation, dépendante de la pression, de la position de la partie (8) mobile par rapport à un support (12) en deux signaux numériques déphasés l'un par rapport à l'autre, et d'un dispositif de comptage avant/arrière commandé par les signaux numériques, dont l'indication de position correspond à la pression qui est précisément appliquée, caractérisé par un disjoncteur (40, 41) actionné par une force générée par une pression excessive sur la membrane (5).

2. Capteur de pression selon la revendication 1, caractérisé en ce que la partie mobile dans le sens contraire à la force élastique de l'élément de ressort (13,13') est un levier (8) articulé sur un support (12), qui peut pivoter autour d'un axe (9,9'), lequel est sensiblement parallèle à la surface de membrane à distance de la perpendiculaire au niveau du centre de gravité de la surface de la membrane (5).

3. Capteur de pression selon la revendication 2, caractérisé en ce que le levier (8) est articulé sur le support (12) par un ressort à lame, au moyen duquel le levier peut pivoter sans frottement et sans jeu autour de l'axe (9') et qui assume tout ou partie de la fonction de l'élément de ressort (13).

4. Capteur de pression selon la revendication 3, caractérisé en ce que le levier (8) et le ressort à lames (13') sont découpés d'une seule pièce dans un matériau plat de ressort à lames, le levier étant rendu rigide dans des zones (8',8") souhaitées par des moulures et/ou des chanfreins.

5. Capteur de pression selon l'une quelconque des revendications 2 à 4, caractérisé en ce que sur le bras de levier est formée d'une seule pièce une fixation pour une partie (16) déplacée avec le levier (8) du capteur de position (16,19,34,35,36).

6. Capteur de pression selon l'une quelconque des revendications 2 à 5, caractérisé en ce que sur le bras de levier est appliqué un prolongement (14) rigide, qui dépasse de l'axe (9,9') et sur lequel un contrepoids (11) peut être appliqué, ce qui fait que le centre de gravité du levier (8) est décalé vers l'axe (9,9') avec toutes les parties mobiles reliées.

7. Capteur de pression selon l'une quelconque des revendications 2 à 6, caractérisé en ce que la membrane (5) est couplée au levier (8) par un ressort à lame, dont les bords de fixation sont sensiblement parallèles à l'axe (9,9') et qui transmet la force de membrane au levier (8) sans plier, le ressort à lame étant déformé lors des déviations du levier et la force, que le ressort à lame oppose à cette déformation, étant intégrée dans la force élastique de l'élément de ressort (13, 13').

8. Capteur de pression selon l'une quelconque des revendications 2 à 7, caractérisé en ce que l'indicateur de position (16,19,34,35,36) incrémentiel présente une grille (16) fixée sur la partie (8) mobile et formée sur un substrat transparent par des bandes perméables à la lumière et imperméables, une deuxième grille (19) du même type fixée sur le support (12) ou le boîtier de capteur, une source lumineuse (34) et deux photodétecteurs (35,36), qui reçoivent chacun la lumière transmise par les deux grilles disposées l'une derrière l'autre, modulée au niveau de l'intensité par les bandes de grilles avec un déplacement opposé de celles-ci et provenant de la source lumineuse et la convertissent en l'un des deux signaux numériques déphasés.

9. Capteur de pression selon la revendication 8, caractérisé en ce que la constante de la grille (16) fixée sur la partie (8) mobile n'est pas constante sur toute sa longueur, mais est inégale le long de la perpendiculaire aux bandes, afin d'obtenir ainsi un rapport non linéaire entre le déplacement des grilles entre elles et la longueur de période de la modulation de l'intensité de la lumière qui passe par les deux grilles.

10. Capteur de pression selon l'une quelconque des revendications 8 ou 9, caractérisé en ce qu'au moins l'une des deux grilles (16,19) est subdivisée en deux zones (25,26) le long d'une ligne de séparation non parallèle aux bandes et sensiblement parallèle au sens de déplacement des grilles et en ce que la grille est décalée par rapport à l'autre d'un quart de la constante de grille dans l'une des deux zones dans le plan de grille perpendiculairement aux bandes, un photodétecteur (35,36) propre étant disposé dans chacune des deux zones qui sont traversées par la source lumineuse (34) et sont recouvertes par l'autre grille, lequel détecteur reçoit largement uniquement la lumière qui passe dans la zone concernée des deux grilles, les deux photodétecteurs (35,36) générant lors du déplacement des deux grilles l'une par rapport à l'autre des signaux électriques qui sont déphasés d'un quart de la longueur de période les uns par rapport aux autres.

11. Capteur de pression selon l'une quelconque des revendications 8 ou 9, caractérisé en ce que l'une des deux grilles (16,19) est disposée de façon à pouvoir tourner autour d'un axe disposé perpendiculairement au plan de grille par rapport à l'autre grille d'un angle (29) constant inférieur à 90°, de sorte que lorsqu'on regarde à travers les deux grilles situées l'une derrière l'autre, il se forme des modèles d'interférence géométriques, dans lesquels la zone de luminosité constante suit la bissectrice de l'angle obtus entre les bandes des deux grilles, les deux photodétecteurs (35,36) destinés à recevoir la lumière transmise pour générer des signaux déphasés d'un quart de la longueur de période lors du déplacement des grilles étant disposés l'un par rapport à l'autre en maintenant l'angle (29) constant de telle façon qu'ils saisissent des zones des modèles d'interférence, qui sont éloignés l'un de l'autre de n/4 de la longueur de période locale des bandes d'interférence mesurée perpendiculairement à ces bandes, n étant un nombre entier impair, de préférence "1".

12. Capteur de pression selon l'une quelconque des revendications 8 ou 9, caractérisé en ce que les deux grilles (16,19) ont des constantes de grille différentes, de sorte que, avec une disposition sensiblement parallèle des bandes d'une grille par rapport à celles de l'autre, il se forme des bandes d'interférence qui sont parallèles aux bandes de grille et se déplacent perpendiculairement aux bandes de grille lors du déplacement mutuel des grilles, la longueur de période locale de ces bandes d'interférence dépendant du rapport des deux constantes de grille et en ce que, dans cette zone de bandes d'interférence, les deux photodétecteurs (35,36) sont disposés en étant décalés l'un par rapport à l'autre de façon que leur espacement soit égal, selon la perpendiculaire aux bandes de grille, à n/4 de la longueur de période locale des bandes d'interférence, n étant un nombre impair et entier, de préférence "1", et les deux photodétecteurs génèrent ainsi lors du déplacement mutuel des deux grilles des signaux qui sont déphasés de ¼ de la longueur de période l'un par rapport à l'autre.

13. Capteur de pression selon l'une quelconque des revendications 8 à 12, caractérisé en ce que les deux grilles (16,19) ont la forme d'une enveloppe de cylindre ou d'une enveloppe de cône et l'axe du cylindre ou du cône de la grille fixée sur le levier (8) coïncide sensiblement avec l'axe (9,9') du levier, l'autre grille est fixée sur le support 12 ou sur le boîtier du dispositif capteur de telle façon que son axe est sensiblement parallèle à l'axe (9,9') et les bandes de grille ne se situent pas dans un plan perpendiculaire à cet axe.

14. Capteur de pression selon la revendication 13, caractérisé en ce que la grille (19) fixe est plane, tandis que la grille (16) mobile avec le levier (8) a une forme d'enveloppe de cylindre ou de cône.

15. Capteur de pression selon l'une quelconque des revendications 8 à 12, caractérisé en ce que les deux grilles sont planes et fixées sur le levier (8) ou sur le support (12) ou sur le boîtier de capteur de telle sorte que leurs surfaces sont perpendiculaires à l'axe (9,9'), que les bandes de grille arrivent de façon radiale sur cet axe ou sont tangentes à un cercle concentrique par rapport à cet axe, dont le rayon est inférieur à l'espacement entre la zone de travail géométrique des photodétecteurs et l'axe, un angle de partage remplaçant une mesure de longueur pour la constante de grille et soit au moins l'une des deux grilles est partagée en deux zones avec un modèle de bande décalé dans le sens périphérique soit les deux grilles sont réalisées de façon que les bandes de grille se coupent selon un angle et les modèles d'interférence ont la forme de cercles concentriques, dont le diamètre varie lorsqu'on fait tourner les grilles l'une par rapport à l'autre ou bien les deux grilles sont réalisées avec une constante de grille différente et les modèles d'interférence qui se forment sont parallèles aux bandes de grille et tournent autour de l'axe de rotation lors de la rotation des grilles l'une par rapport à l'autre et que la source lumineuse et les photodétecteurs sont disposés de telle sorte que, lorsqu'on fait tourner la grille mobile autour de son centre, les photodétecteurs génèrent des signaux qui sont déphasés d'un quart de la longueur de période lorsqu'on fait tourner les deux grilles l'une par rapport à l'autre.

16. Capteur de pression selon la revendication 15, caractérisé en ce que la grille radiale mobile, qui peut être réalisée de façon identique à la grille immobile, n'est pas fixée de façon concentrique par rapport à la grille immobile, mais avec un déport du centre, de sorte que dans une zone géométrique limitée, dont le milieu est décalé d'un angle de 90° par rapport à ce déport du centre, il se forme des modèles d'interférence qui se déplacent dans un plan radial lorsqu'on tourne les deux grilles l'une par rapport à l'autre, les deux photodétecteurs étant fixés dans cette zone géométrique limitée de telle façon que les signaux déphasés d'un quart de la longueur de période sont générés lorsqu'on fait tourner les deux grilles l'une par rapport à l'autre.

17. Capteur de pression selon l'une quelconque des revendications 8 à 16, caractérisé en ce que les bandes de grille sont conçues de façon réfléchissante et que la source lumineuse (34) et les photodétecteurs (35,36) sont disposés sur le même côté du dispositif des deux grilles.

18. Capteur de pression selon l'une quelconque ou plusieurs des revendications 8 à 16, caractérisé en ce que le dispositif des deux grilles est déposé avec un élément à réflexion diffuse ou dirigée et la source lumineuse (34) comme les photodétecteurs (35,36) sont disposés sur le même côté du dispositif des deux grilles.

19. Capteur de pression selon l'une quelconque des revendications 8 à 18, caractérisé en ce que des composants optiques tels que miroirs, lentilles, prismes, etc., sont montés dans le trajet lumineux qui va de la source lumineuse aux photodétecteurs (34,35) en passant par la paire de grilles (16,19).

**20.** Capteur de pression selon l'une quelconque des revendications 8 à 19, caractérisé en ce que la source lumineuse (34) est fixée conjointement avec les photodétecteurs (35,36) sur le support (12).

**21.** Capteur de pression selon l'une quelconque des revendications 8 à 19, caractérisé en ce que la source lumineuse (34) est fixée conjointement avec les photorécepteurs (35,36) sur le boîtier (36) du capteur et le support (12) est réalisé de façon mobile par rapport au boîtier, aucune liaison électrique flexible n'étant indispensable entre le boîtier ou les branchements externes et fixes par rapport au boîtier pour la source lumineuse et/ou les photodétecteurs.

**22.** Capteur de pression selon l'une quelconque des revendications 8 à 19, caractérisé en ce que la source lumineuse (34) sur le support (12) et les photodétecteurs (35,36) sur le boîtier (38) du capteur ou la source lumineuse sur le boîtier et les photodétecteurs sont fixés sur le support.

**23.** Capteur de pression selon l'une quelconque des revendications 8 à 22, caractérisé en ce que la source lumineuse (34) est exploitée par une source de courant ou de tension avec une certaine dépendance vis-à-vis de la température de telle façon que, lorsque la position des grilles (16, 19) l'une par rapport à l'autre n'est pas modifiée, le signal de sortie des photodétecteurs (35,36) est largement constant indépendamment de la température dans les limites de la plage de température de service du capteur, ce qui entraîne que la dépendance de la source lumineuse et des photodétecteurs par rapport à la température est compensée en utilisant des photodétecteurs du même type ou des photodétecteurs avec une dépendance vis-à-vis de la température largement identique.

**24.** Capteur de pression selon l'une quelconque des revendications 8 à 22, caractérisé en ce que la source de courant ou de tension pour le fonctionnement de la source lumineuse est un circuit de réglage auquel le signal de sortie d'un autre photodétecteur est amené dans la branche de retour, lequel photodétecteur est monté de telle sorte qu'il est éclairé directement ou indirectement par la source lumineuse et que l'intensité qui l'atteint n'est pas influencée par la position des grilles, en utilisant comme autre photodétecteur un modèle avec une dépendance vis-à-vis de la température identique à celle pour la réception de la lumière modulée par les grilles.

**25.** Capteur de pression selon l'une quelconque des revendications 1 à 24, caractérisé en ce que le dispositif de comptage électronique avant et arrière est un micro-ordinateur programmé en conséquence et/ou est monté de façon fixe dans le boîtier du dispositif capteur ou est un micro-ordinateur programmé en conséquence et déjà présent, qui est utilisé lors de la commande du programme, par exemple d'un lave-linge ou d'un lave-vaisselle ou similaire.

**26.** Capteur de pression selon l'une quelconque des revendications 1 à 25, caractérisé en ce que pour l'amortissement de variations de pression à court terme, on introduit dans la liaison pneumatique allant au compartiment (2) par la membrane (5) un rétrécissement (6) qui agit comme un clapet pneumatique et en liaison avec le volume disposé derrière agit comme un filtre passe-bas pour des fluctuations de pression, dont la constante de temps est réglée de façon que la partie (8) mobile exécute encore de faibles mouvements autour de la position correspondant à la valeur moyenne de la pression sous l'effet des fluctuations de pression résiduelles dans le compartiment de membrane.

**27.** Capteur de pression selon l'une quelconque des revendications 1 à 26, caractérisé en ce qu'une valeur moyenne est calculée lors de la saisie des valeurs de pression fluctuant dans le temps à partir de plusieurs valeurs de pression enregistrées à des intervalles de temps, plusieurs valeurs enregistrées de façon répartie dans le temps sur une ou plusieurs périodes étant utilisées pour faire la moyenne dans le cas de fluctuations de pression périodiques ou approximativement périodiques, ce qui entraîne que l'influence du frottement dans et entre les parties mobiles du capteur est largement éliminée.

**28.** Capteur de pression selon la revendication 27, caractérisé en ce que, lors du calcul de la valeur moyenne à partir des valeurs individuelles, la résolution de la valeur mesurée est améliorée par le fait que le résultat de la moyenne est calculé de façon plus précise d'un nombre correspondant de chiffres binaires que celui qui correspond au pas de comptage primaire et que le résultat de la moyenne est ainsi calculé de façon précise avec des demis, des quarts, etc., de pas de chiffre, ce qui permet d'obtenir une amélioration significative de la résolution.

**29.** Capteur de pression selon l'une quelconque des revendications 1 à 28, caractérisé en ce qu'une mémoire de valeur d'étalonnage mémorise en permanence les écarts entre les valeurs de pression calculées lors d'un étalonnage et les valeurs de pression réelles correspondantes pour corriger les valeurs de pression enregistrées et que la mémoire des valeurs d'étalonnage est intégrée dans le capteur ou est attribuée à celui-ci de façon fixe.

**30.** Capteur de pression selon la revendication 29, caractérisé en ce que dans la mémoire des valeurs d'étalonnage sont mémorisées des valeurs chiffrées qui contiennent les sommets d'un tracé polygonal représentant approximativement la courbe d'écart ou sont des paramètres d'une fonction mathématique rapprochée de la courbe d'écart.

31. Capteur de pression selon l'une quelconque des revendications 1 à 30, caractérisé en ce que la force de membrane est repartie par un dispositif à levier entre au moins deux points de débit de force, la partie (8) mobile en fonction de la pression étant couplée en un tel point à l'élément de ressort (13,13') et le capteur de position (16,19,34,35,36) incrémentiel, avec sur un autre point de débit un interrupteur qui est prétendu de préférence au moyen d'une force élastique réglable d'un ressort de prétension, au niveau de la force, contre une butée fixe sur le boîtier du capteur et dont la position de commutation varie lorsque la partie de la force de membrane, qui est transmise au commutateur par le dispositif à levier, dépasse la prétension dirigée dans le sens contraire au niveau de la force.

32. Capteur de pression selon l'une quelconque des revendications 1 à 30, caractérisé en ce que le support (12), sur lequel est logée la partie (8) mobile en fonction de la pression et soumise à l'effet de force de l'élément de ressort (13,13'), est logé de façon pivotante au moyen d'un palier, de préférence un palier de ressort à lame sur le boîtier (38) du capteur autour d'un axe (37) sensiblement parallèle à la surface de membrane et s'étendant à distance de la perpendiculaire (39) au niveau du centre de gravité de la membrane et est appuyé par la force élastique de préférence réglable d'un ressort de prétension (42) contre une butée (43) fixe sur le boîtier et en ce que le disjoncteur (40,41) est actionné par le mouvement pivotant du support par rapport au boîtier qui se forme lorsque la force de membrane sur le support, qui est transmise par la partie mobile et l'élément de ressort, dépasse la force élastique opposée du ressort de prétension.

33. Capteur de pression selon la revendication 32, caractérisé en ce que le mouvement pivotant du support (12) par rapport au boîtier (38) du capteur a pour effet qu'un contact (40) du disjoncteur est déplacé de sa position de repos en direction d'un contact (41) fixe sur le boîtier jusqu'à ce que les deux contacts soient l'un sur l'autre et qu'une liaison électroconductrice soit ainsi établie.

34. Capteur de pression selon la revendication 32 ou 33, caractérisé en ce que la butée (43) du support (12) dans le boîtier (38) forme un contact de repos du disjoncteur, qui est en liaison électroconductrice avec un contact (40) mobile en même temps que le support lorsque le support est appuyé par le ressort de prétension (42) et est séparé du contact mobile par le mouvement pivotant du support, une butée fixe sur le boîtier délimitant le déplacement du support qui écarte de la butée (43) lorsqu'il n'y a pas de contact (41) fixe.

35. Capteur de pression selon la revendication 32, caractérisé en ce que le disjoncteur commandé par le mouvement pivotant du support (12) par rapport au boîtier (38) est un interrupteur instantané connu avec hystérésis du déplacement de commutation, le retour de l'interrupteur dans la position de repos n'intervenant qu'une fois que la pression a baissé d'une valeur dépendante de l'hystérésis de l'interrupteur par rapport à la pression à laquelle le processus de mise en route a été déclenché.

36. Capteur de pression selon l'une quelconque des revendications 32 à 34 caractérisé en ce que la prétension, par laquelle le support (12) monté de façon pivotante est appuyé contre la butée (43) dans le boîtier (38), est donnée par un dispositif à ressort, dont la force de prétension agit selon un angle d'attaque sur le support, dont la grandeur varie lors du mouvement pivotant du support, ce qui fait que la composante de force agissant sur le support et dirigée en direction de la butée diminue avec l'augmentation de la distance entre le support et la butée.

37. Capteur de pression selon la revendication 36, caractérisé en ce que le dispositif de ressort comprend un ressort de traction (50), dont une extrémité est fixée de façon pivotante au point (55) sur le support (12) sans frottement autour d'un axe sensiblement parallèle à l'axe (37) et dont l'autre extrémité est fixée sur l'autre côté de l'axe au point (51) sur le boîtier (38) de façon à pouvoir pivoter sans frottement autour d'un axe sensiblement parallèle à l'axe (37), la distance (53) verticale de ce deuxième point de fixation à la ligne de liaison prolongée entre l'axe (37) et le point de fixation (55) étant réglée de façon variable de préférence au moyen d'une vis (54).

38. Capteur de pression selon la revendication 36, caractérisé en ce que le dispositif à ressort comprend un ressort de pression dont une extrémité est fixée au point (55) sur le support (12) de façon à pouvoir basculer sans frottement autour d'un axe sensiblement parallèle à l'axe (37) et dont l'autre extrémité est fixée de l'autre côté de l'axe (37) sur le boîtier (38) de façon à pouvoir pivoter sans frottement autour d'un axe sensiblement parallèle à l'axe (37), ce deuxième point de fixation étant plus éloigné de l'axe (37) que le point (55) et sa distance verticale à la ligne de liaison prolongée entre l'axe (37) et le point de fixation (55) étant réglée de façon variable de préférence au moyen d'une vis.

**39.** Capteur de pression selon l'une quelconque des revendications 36 à 38, caractérisé en ce que la force de prétension, avec laquelle le ressort de traction ou de pression est monté et agit sur ses points de fixation des deux côtés, est ainsi adaptée au dimensionnement de l'élément de ressort (13,13') de façon que le changement de position du support (12) depuis la butée (43) jusqu'à la rencontre des contacts (40,41) s'effectue brusquement lorsqu'on dépasse l'écart de pression préréglé entre les deux côtés de la membrane, sans que la position de levage de la membrane varie de façon importante pendant le temps de commutation.

**40.** Capteur de pression selon l'une quelconque des revendications 32 à 39, caractérisé en ce que le ressort, qui génère la prétension du support (12) en direction de la butée (43), ou l'articulation, par exemple le palier de ressort à lames, avec lequel le support est fixé de façon pivotante autour de l'axe (37) sur le boîtier (38), est utilisé comme liaison électroconductrice souple entre le contact (40) et le raccordement (45) extérieur.

**41.** Capteur de pression selon l'une quelconque des revendications 36 à 40, caractérisé en ce que l'hystérésis de commutation du disjoncteur est réglable et est donnée par l'angle de pivotement déterminé de préférence par exemple par la position d'une vis, angle que le support (12) parcourt depuis la butée (43) jusqu'à la rencontre des contacts (40,41) ou l'impact sur une autre butée fixe sur le boîtier (38).

**42.** Capteur de pression selon l'une quelconque des revendications 32 à 41, caractérisé en ce que plusieurs disjoncteurs avec un équipement en contacts identique ou différent sont montés dans le boîtier du capteur, qui commutent pour les mêmes écarts de pression ou des écarts de pression différents entre les deux côtés de la membrane (5).

**43.** Capteur de pression selon l'une quelconque des revendications 1 à 42, caractérisé en ce qu'un ou plusieurs connecteurs multibroches avec un nombre de pôles approprié et/ou des plots de brasage est/sont relié(s) de façon fixe au boîtier (38) du dispositif capteur, connecteur(s) par lequel/lesquels des liaisons électriques sont amenées au dispositif capteur, à des composants ou modules électroniques montés dans le boîtier et/ou au(x) disjoncteur(s) et partent de celui-ci ou de ceux-ci.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15